# EUROPEAN PATENT APPLICATION

(11) **EP 4 843 960 A1**
(43) Date of publication of application: **25.11.2026**
(21) Application number: 26175458.4
(22) Date of filing: 29.04.2026
(51) Int. Cl.: C02F 1/40, E02B 15/04, C02F 103/00, C02F 103/08

(54) **WATER SURFACE FLOATING LAYER REMOVAL APPARATUS HAVING A RIM-DRIVEN PROPELLER**

(30) Priority: 22.05.2025 KR 20250067060
(71) Applicant: Sheco. Inc., Incheon 21631 (KR); Sheco Singapore Pte. Ltd., Singapore 639405 (SG)
(72) Inventor: HAN, Sang Hoon, 21443 Incheon (KR); GWON, Gi Sung, 21552 Incheon (KR); KIM, Hong Min, 22110 Incheon (KR)
(74) Representative: Dantz, Jan Henning

(57) **Abstract**

According to an embodiment of the present disclosure a surface floating layer removal apparatus is provided, comprising: a hull, a contaminated water inlet arranged at a front portion of the hull to receive contaminated water, the contaminated water inlet including one or more rim-drive impellers, a storage unit for storing the contaminated water introduced through the contaminated water inlet, the storage unit including a discharge port for discharging the filtered contaminated water to the outside of the hull, and a pump for moving the contaminated water from the storage unit to the outside of the storage unit.

## Description

### FIELD

The present invention relates to a surface floating layer removal apparatus. More specifically, it relates to an apparatus that facilitates the inflow, separation, and discharge of oil water (oily water) mixed with water and oil.

This apparatus may include a rim-drive based recovery unit in its recovery section, and in addition to, or separately from, it, may include a cartridge, which is a detachable external storage container.

### BACKGROUND

When an oil spill accident occurs on the surface of water such as the sea or a lake, it is necessary to promptly perform oil spill response operations to prevent the oil from spreading widely.

An oil spill refers to the unintentional discharge of liquid petroleum hydrocarbons into the surrounding environment as a result of human activities. 'Oil' can include crude oil, refined oil, refined petroleum products (gasoline, diesel, etc.), by-products, bunker oil from ships, or oily waste. It can take months to years to clean up spilled oil.

To remove such spilled oil, methods such as injecting emulsifiers or absorbents into the sea, or removal using adsorbent sheets or automated oil-water separators are used.

For example, when performing such oil spill response operations, an oil fence is installed around the area where the oil has spilled. Then, a method of removing oil is utilized where workers throw rectangular adsorbent sheets made of non-woven fabric or the like inside the oil fence, allow the adsorbent sheets to absorb the oil, and then manually collect the adsorbent sheets.

However, when performing oil spill response operations in this manner, the adsorbent sheets must be accurately thrown onto the spilled oil area, making it difficult to effectively control oil distributed over a wide area. Furthermore, because workers must collect the adsorbent sheets that have absorbed the oil, a problem arises in that collection takes a long time.

In particular, when workers collect the adsorbent sheets manually in this way, they are exposed to the oil, and a problem arises where the workers inhale oil vapors evaporated from the oil, causing health issues.

Therefore, various marine oil spill response devices have recently been developed and used to solve these problems.

However, these marine oil spill response devices are installed and used on large ships, which presents problems of inconvenient mobility and difficulty in rapid deployment to the site.

Furthermore, with these marine oil spill response devices, the ship's operator must visually confirm the location of the floating oil and move the ship to the oil's location, which presents a significant problem in that it is very difficult for a person to visually confirm oil floating far away.

In addition, oil spill response operations to control oil floating on the water surface take a long time. As mentioned above, when the operator visually confirms the oil's location and operates the ship, they easily become fatigued, leading to a problem where continuous oil spill response operations cannot be performed for long periods.

In addition to methods using adsorbent sheets, known automated oil-water separation methods include Weir Skimmers, Oleophilic Skimmers, Conveyor Skimmers, Hydro-Dynamic Skimmers (centrifugal type), mobile and fixed (ship-mounted) oil skimmers, and Vacuum Skimmers. All these devices are installed and used on large ships, etc.

In South Korea, oil spill accidents occur approximately 270 times annually, with the spilled amount reaching 700,000 L (liters). Most oil spills are small-scale accidents of 100 L or less, accounting for 70% of the total accident frequency. The problem is that existing automated equipment are all expensive and large-scale, and they must use different equipment depending on the oil type. As a result, they are mainly used for large oil spill accidents, while small-scale accidents are mostly handled by conventional, labor-intensive adsorbent sheet operations.

In that process, as described above, industrial accidents such as oil odor, headache, and back pain occur among the cleanup workers, which naturally increases working hours, makes initial response difficult, and increases the amount of waste.

Therefore, a new method or apparatus to solve these problems has become necessary.

### BRIEF SUMMARY

A technical problem to be solved by the present invention is to provide an automated surface floating layer removal (recovery) apparatus for efficiently responding to small-scale oil spill accidents.

Another technical problem of the present invention is to prevent the phenomenon of oil being pushed away due to the contaminated water recovery unit scooping up water.

A further technical problem is to provide a robotic structure designed to enable large-capacity oil treatment through a real-time oil-water separation function when recovering contaminated water from small-scale spill accidents, and to minimize the contamination level of the clean water discharged after oil-water separation to a level of 15 ppm or less.

Another technical problem is to provide an apparatus capable of transferring oil collected inside the oil recovery robot (10) to a cartridge (60) in the rear part of the robot in an unmixed state with water, so that workers can obtain only pure, accumulated oil in the cartridge (60).

The technical problems of the present invention are not limited to those mentioned above, and other technical problems not mentioned will be clearly understood by a person of ordinary skill in the art from the description below.

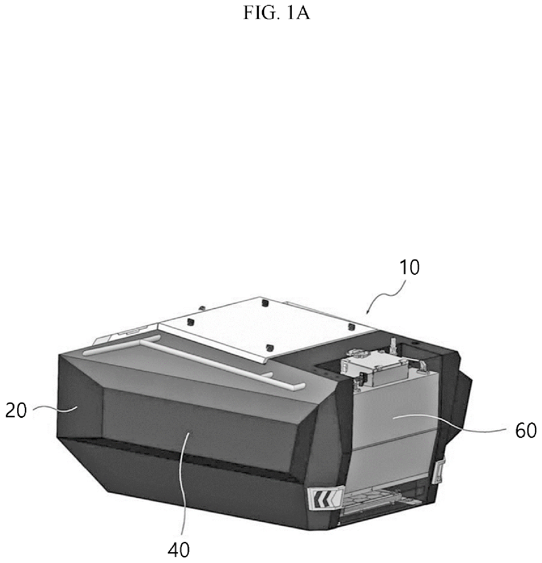

As an example of the effect of the first embodiment of the present invention (FIGS. 1A, 1B, 4-6, etc.), it facilitates the extraction of contaminant (spilled oil) collected inside the robot (10) (surface floating layer recovery apparatus) to the outside (cartridge (60)).

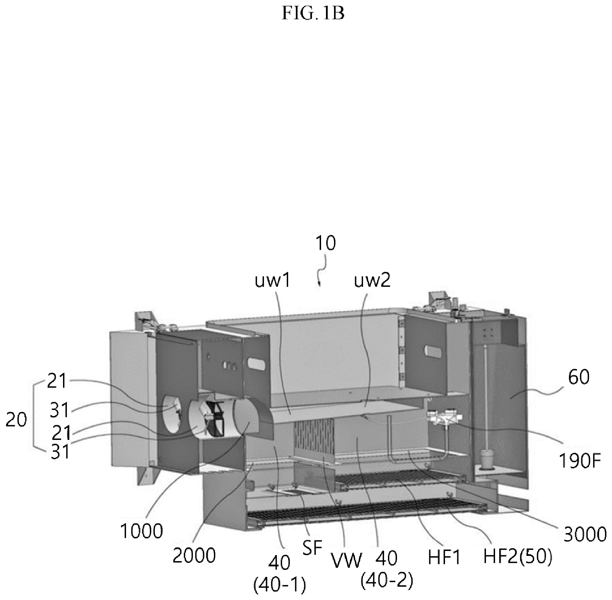

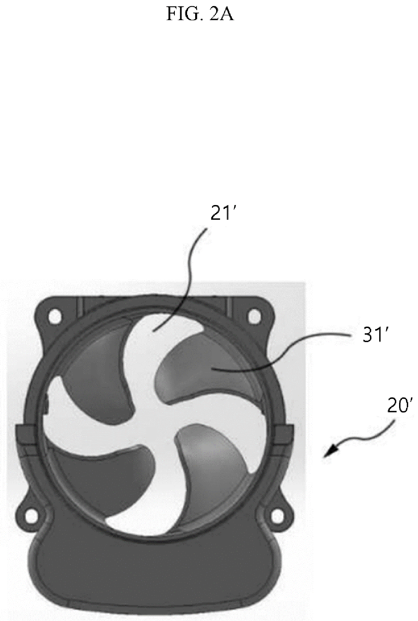

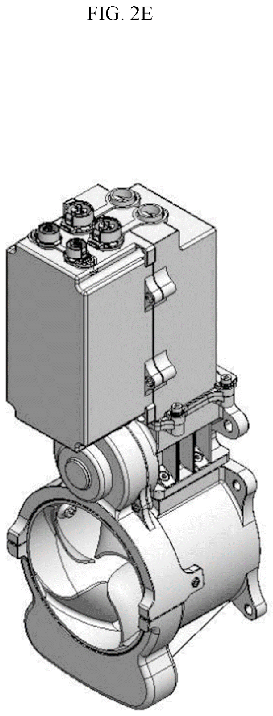

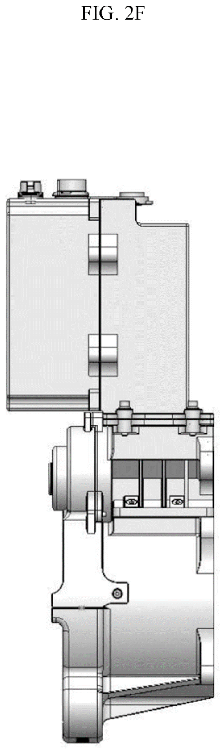

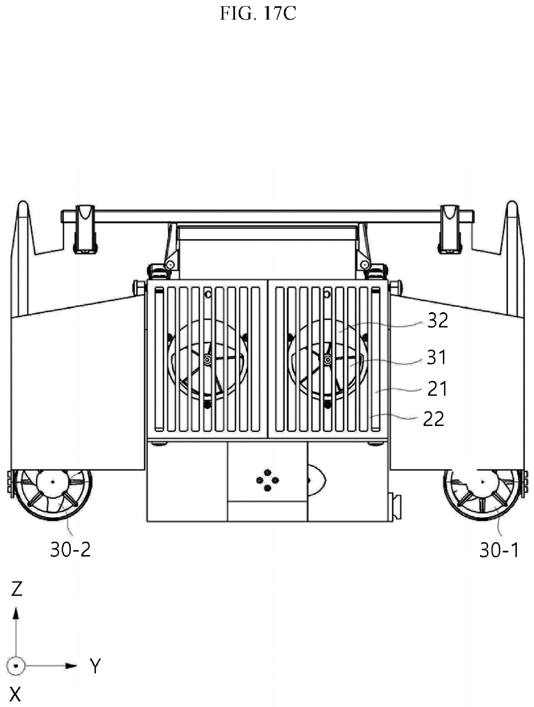

As an example of the effect of the second embodiment of the present invention (FIGS. 2A-2F, etc.), in the case of the impeller (31) with a shaft (rotation axis) as in FIG. 1B (i.e., the first embodiment), a problem arises where the blade of the impeller (31) scoops up water and spits it forward when it rotates and emerges from the water. This, in turn, causes the phenomenon of oil being pushed away. This can be partially prevented by installing a plate (i.e., a splash guard (not shown) (however, the splash guard (32) is shown in FIG. 17C of the later-described fourth embodiment)) that blocks a portion of the upper part of the inlet (21), but complete blocking is difficult. Furthermore, when the robot (10) (oil recovery apparatus, surface floating layer removal apparatus) travels forward on the water to recover oil, if the impeller (31) with a shaft (i.e., the first embodiment of FIG. 1B) goes above a certain travel speed, the phenomenon occurs where the oil on the water surface is pushed away instead of flowing into the recovery unit (20). This is presumed to be because, during travel, a large amount of water flows in, causing the phenomenon of spitting out more water, or the rotation of the shaft and the blade (i.e., impeller (31)) obstructs the inflow of a larger flow rate.

However, when the impeller (31) shown in FIG. 1B (i.e., the first embodiment) is replaced with a rim-drive structure impeller (31') shown in FIG. 2a (i.e., embodiment 2), the phenomenon of the blade (i.e., the vane of the impeller (31')) scooping up water does not occur, and thus the phenomenon of oil being pushed away does not occur. Moreover, when recovering oil while moving forward, the phenomenon of oil being pushed away does not occur at all (or hardly) regardless of the travel speed. Of course, there is a change (increase) in the recovery amount depending on the relative speed.

Although the rim-drive recovery unit structure (i.e., the impeller (31')) shown in FIG. 2a is a simplified representation, it is equipped with a motor, mechanical elements for power transmission, a motor driver, rim-drive blades (vanes), and finally, various sensors (vibration sensor, thermal sensor, encoder sensor, etc.). Utilizing the data from these sensors, it is possible to diagnose various error situations and estimate the life cycle of internal parts to notify the replacement cycle. Furthermore, it can possess a function to automatically determine and propose the optimal rotation speed for different marine environments and contaminants to the customer.

As an example of the effect of the third embodiment of the present invention, the oil collected inside the oil recovery robot (10) (surface floating layer recovery apparatus) can be transferred to the cartridge (60) in the rear part (or outside) of the robot (10) in an unmixed state with water, allowing the worker to obtain only pure (with high separation purity) accumulated oil in the cartridge (60).

In addition, the recovered oil is gathered in the area near the sea surface in the rear (40-2) of the internal storage unit (40) after passing over the inclined surfaces (uw1, uw2). By selectively recovering only the oil that has accumulated due to density difference, only the precisely desired contaminated water can be recovered.

Furthermore, in the comparative example, when a large amount of oil is recovered, the oil accumulates inside the storage unit. If this oil is not continuously discharged, the recovery amount gradually decreases, and oil may leak out. However, the present invention can operate the pump (P) in real-time to continuously recover only the oil, thereby maintaining the recovery amount and allowing smooth usage until the external storage container (60) (cartridge) is full.

When the external storage container (60) accumulates contaminants (e.g., oil) corresponding to its capacity limit, the action of the buoyancy body (111) and the Hall sensor (121) indicates this via an LED or other light (L).

Inside the oil storage device (60) (external storage container, cartridge), two vertical partitions with different shapes are used. The primary partition (115) has holes only at the sea level position and the lowest position, serving to keep the oil floating on the sea surface. The secondary partition (117) uses a mesh filter over a wide area to slow down the movement by utilizing the viscosity of the contaminant, preventing sensor malfunction. It also serves to filter internal contaminants.

A buoyancy body (111) with a magnet (M) attached is located at the bottom inside the cartridge (60), and a Hall sensor (121) is located inside or outside (of the cartridge (60)) opposite to it. When the accumulation of contaminant reaches the location of the Hall sensor (121) (i.e., when it descends to the location of the Hall sensor (121)) (the latest), contaminant can be accumulated using the maximum capacity of the storage device (60) (cartridge).

### DESCRIPTION OF THE FIGURES

FIG. 1A is a rear perspective view showing an apparatus according to a first embodiment of the present invention.
FIG. 1B is a front perspective view showing the apparatus according to the first embodiment of the present invention.
FIGS. 2A to 2C illustrate another type of recovery unit (20') (also referred to as the second embodiment) replacing the recovery unit (inlet) (20) shown in FIG. 1B.
FIGS. 2D to 2F additionally illustrate a portion (upper part (201, 202)) including a motor, a motor driver, a sensor, and the like, added to the rim-drive structure (lower part (21', 31')) respectively shown in FIGS. 2A to 2C.
FIG. 3 separately illustrates the upper filter (HF1) and the lower filter (HF2) shown in FIG. 1B.
FIG. 4 is a side cross-sectional view taken directly from the side of the front-side perspective cross-sectional view shown in FIG. 1B.
FIG. 5 is a view similar to FIG. 4, but focused on the flow of contaminated water.
FIG. 6 is a diagram illustrating the transfer of contaminant (e.g., oil) from the internal storage container (40) to the external storage container (60).
FIG. 7A is a cross-sectional view illustrating a form in which a floating part (190F) is attached to a header part (190), and FIG. 7B is a perspective view of the floating part (190F) shown in FIG. 7A.
FIG. 8 is a view similar to FIG. 1, but more clearly illustrating the detachable state of the external storage container (60).
FIG. 9 is a perspective view of the external storage container (60) of FIG. 8.
FIG. 10 is a cross-sectional view of the external storage container (60) shown in FIG. 9 (the case where this external storage container (60) is applied is also referred to as the third embodiment).
FIG. 11 is a perspective view of the cross-section of the external storage container (60) shown in FIG. 10.
FIG. 12 is a photograph showing an actual situation where oil and water are separated by a primary partition (115) and a secondary partition (117).
FIG. 13A illustrates a situation where a buoyancy body (111) is floating, FIG. 13B illustrates a situation where the buoyancy body (111) is sinking, and FIG. 13C illustrates a situation where the buoyancy body (111) has sunk and is near a Hall sensor (121).
FIG. 14 is a rear view of the hull (10).
FIG. 15 is a comparative example assuming a case where the external storage container (60) has no partitions (115, 117).
FIG. 16 is an inventive example assuming a case where the external storage container (60) has partitions (115, 117).
FIG. 17A is an upper perspective view showing an apparatus according to a fourth embodiment of the present invention.
FIG. 17B is a lower perspective view showing the apparatus according to an embodiment of the present invention.
FIG. 17C is a front view of the apparatus according to an embodiment of the present invention.
FIGS. 18A to 18C are diagrams illustrating an impeller guard (30G) according to the present invention.
FIG. 19 is a diagram illustrating an example of the hull of the surface floating layer removal apparatus according to another embodiment of the present invention.
FIG. 20 is a diagram illustrating the hull of the surface floating layer removal apparatus according to an embodiment of the present invention and the contaminated water inlet that can be coupled to the hull.
FIG. 21 is a block diagram illustrating the configuration of the contaminated water inlet according to an embodiment of the present invention.
FIG. 22 is a flow chart illustrating an example of determining whether the rim-drive impeller is worn according to an embodiment of the present invention.
FIG. 23 is a flow chart illustrating an example of determining whether the rim-drive impeller is jammed according to an embodiment of the present invention..

### DESCRIPTION OF EMBODIMENTS

According to the present invention, a surface floating layer removal apparatus capable of floating and moving on the water surface is provided, comprising, a hull, a contaminated water inlet arranged at a front portion of the hull to receive contaminated water, the contaminated water inlet having a rim-drive structure impeller that rotates along the rim without a central rotation shaft, a storage unit for storing the contaminated water introduced through the contaminated water inlet, the storage unit separating the contaminated water into contaminants and water by specific gravity difference, and having a discharge port for discharging the water filtered by a filter to the outside of the hull, and a pump for moving the contaminated water from the storage unit to the outside of the storage unit.

Preferably, it further comprises, a propulsor that exerts propulsion to move the hull in a desired direction and the propulsor includes a propulsor guard around it, the propulsor guard includes (a) a middle area, which is an area overlapping with the propulsor, (b) a front area, which is an area ahead of the propulsor, and (c) a rear area, which is an area behind the propulsor, the middle area, the front area, and the rear area are surrounded by a mesh,
there is a first open space where the mesh is not installed between the middle area and the front area, and there is a second open space where the mesh is not installed between the middle area and the rear area, the middle area moves forward to contact the front area, causing the first open space to disappear and the second open space to become larger, or the middle area moves backward to contact the rear area, causing the first open space to become larger and the second open space to disappear.

Preferably, it further comprises, an oil recovery unit for storing the contaminated water introduced through the contaminated water inlet, an oil recovery unit filter disposed at the bottom of the oil recovery unit for filtering water separated toward the bottom when the contaminated water is separated by density difference, such that oil is separated at the top and water is separated at the bottom, a cartridge for storing the oil separated at the top, a vertically formed cartridge partition is formed inside the cartridge, the flow of the contaminated water is delayed or filtered by the cartridge partition, thereby separating the contaminants, at the bottom of the section farthest from the inlet to the cartridge, among the sections partitioned by the cartridge partition, a buoyancy body is present, capable of moving from a first height downwards to a second height upwards, the buoyancy body has a specific gravity between that of the contaminant and water, the buoyancy body descends along the boundary between the contaminant and water as the contaminant, which has a lower specific gravity than water, fills up in the upper part of the farthest section, and when the buoyancy body descends to a predetermined height at a position corresponding to a predetermined contaminant capacity of the cartridge, a sensor detects it.

Preferably, the cartridge partition includes a primary partition (115) closer to the inlet to the cartridge and a secondary partition (117) farther from the inlet to the cartridge, the separation force of the secondary partition (117) is higher than the separation force of the primary partition (115), among the three spaces partitioned by the primary partition (115) and the secondary partition (117), the space closest to the inlet to the cartridge is called the primary stacking section, the space between the primary partition (115) and the secondary partition (117) is called the secondary stacking section, and the space farthest from the inlet to the cartridge is called the tertiary stacking section, a discharge hole and a means for opening and closing the discharge hole are formed in the primary stacking section.

Preferably, the amount of solid marine debris recovered by the surface floating contaminant recovery apparatus is primarily inferred by utilizing a surface monitoring camera to estimate the capacity, and the recovered amount of marine debris is secondarily inferred through input electrical signal, output electrical signal, and travel speed data entering the propulsor, which is the driving unit of the surface floating contaminant recovery apparatus.

Preferably, the primary inference and the secondary inference include, a step of analyzing the amount of captured contaminant through an image obtained from a camera installed at the top of the surface floating contaminant recovery apparatus, and a step of reinforcing the inferred value of the marine debris amount.

Preferably, the step of reinforcing the inferred value of the marine debris amount includes, inferring the travel speed of the surface floating contaminant recovery apparatus through data from GPS and IMU (Inertial Measurement Unit) sensors (referred to as 'Speed A'), and also monitoring the data of the input electrical signal and the output electrical signal of the propulsor, obtaining the travel speed of the robot corresponding to the current input electrical signal and the current output electrical signal based on a pre-calculated propulsion speed table (referred to as 'Speed B'), determining the level of speed propulsion degradation of the surface floating contaminant recovery apparatus through the difference between Speed A and Speed B, and reinforcing the numerical value of the marine debris amount inferred by the camera according to the determined level of speed propulsion degradation.

Preferably, the pre-calculated propulsion speed table is a data table where the propulsion speed of the surface floating contaminant recovery apparatus is calculated based on the data of the input electrical signal and the output electrical signal of the propulsor in an environment without currents and waves.

Preferably, the upper wall of the storage unit is formed to become higher towards the rear of the hull, so that the contaminant, which has a lower specific gravity than water, is concentrated in the rear of the hull compared to the front of the hull within the storage unit, and a vertical partition is vertically formed in the storage unit, and the flow of the contaminated water is delayed by the vertical partition.

Preferably, a floating part is disposed in the rear of the storage unit, the specific gravity of the floating part is between the specific gravity of the contaminant and the specific gravity of the water, and the floating part is connected to the pump via a hose, so that the contaminated water around the floating part moves to the outside of the storage unit by the suction power of the pump.

According to another embodiment of the present invention, a surface floating layer removal apparatus is provided, comprising: a hull; a contaminated water inlet arranged at a front portion of the hull to receive contaminated water, the contaminated water inlet including one or more rim-drive impellers; a storage unit for storing the contaminated water introduced through the contaminated water inlet, the storage unit including a discharge port for discharging the filtered contaminated water to the outside of the hull; and a pump for moving the contaminated water from the storage unit to the outside of the storage unit.

According to embodiments of the present invention, the contaminated water inlet may include an impeller controller for controlling at least one of a target rotational speed or a rotation direction for the one or more rim-drive impellers.

The contaminated water inlet according to embodiments of the present invention may include an encoder for measuring the actual rotational speed of each of the one or more rim-drive impellers and a current sensor for measuring the consumed current of each of the one or more rim-drive impellers.

The impeller controller according to embodiments of the present invention may calculate a required current corresponding to the target rotational speed and determine whether an abnormal condition of the rim-drive impeller exists based on the required current and the consumed current.

The impeller controller according to embodiments of the present invention may determine that the gear of the rim-drive impeller is worn if the consumed current is lower than the required current by at least a first threshold current value, and the actual rotational speed is higher than the target rotational speed by at least a first threshold rotational speed value.

The impeller controller according to embodiments of the present invention may stop the driving of the rim-drive impeller determined to be worn.

The impeller controller according to embodiments of the present invention may determine that the rim-drive impeller is jammed if the consumed current is higher than the required current by at least a second threshold current value, and the actual rotational speed is lower than the target rotational speed by at least a second threshold rotational speed value.

The impeller controller according to embodiments of the present invention may drive the rim-drive impeller determined to be jammed in the reverse rotation direction for a first time, and then drive it again in the original rotation direction.

The contaminated water inlet according to embodiments of the present invention may include a vibration sensor for measuring the vibration of each of the one or more rim-drive impellers and a temperature sensor for measuring the temperature of each of the one or more rim-drive impellers.

The impeller controller according to embodiments of the present invention may determine whether replacement of the rim-drive impeller is necessary based on at least one of the measured temperature or the measured vibration.

The advantages and features of the present invention, and the methods for achieving them, will become clear by reference to the embodiments described in detail below with the accompanying drawings. However, the present invention is not limited to the embodiments disclosed below and can be implemented in various different forms. These embodiments are merely provided to ensure the disclosure of the present invention is complete and to fully convey the scope of the invention to those skilled in the art. The present invention is defined only by the scope of the claims. Throughout the specification, identical reference numerals refer to identical elements.

The advantages and features of the present invention, and the methods for achieving them, will become clear by reference to the embodiments described in detail below with the accompanying drawings. However, the present invention is not limited to the embodiments disclosed below and can be implemented in various different forms. These embodiments are merely provided to ensure the disclosure of the present invention is complete and to fully convey the scope of the invention to those skilled in the art. The present invention is defined only by the scope of the claims. Throughout the specification, identical reference numerals refer to identical elements.

FIG. 1 is a perspective view showing an apparatus according to a first embodiment of the present invention, viewed obliquely from the rear.

The present invention relates to a surface floating layer removal apparatus (10). The surface floating layer removal apparatus (10) may be referred to by various names such as a surface contaminant removal apparatus (10), an oil spill response apparatus (10), an oil spill response robot (10), a surface floating layer removal robot (10), an oil skimmer (10), a semi-submersible oil skimmer (10), and so on. It may also be simply referred to as the hull (10). The hull (10) may be used as a term referring to the surface floating layer removal apparatus (10) itself, or it may be used to refer to the part of the surface floating layer removal apparatus (10) excluding the cartridge (60) (external storage container). However, the difference in meaning is not significant, or if they are used distinguishably, they can be mutually distinguished based on the context.

This surface floating layer removal apparatus (10) is a robotic structure fabricated to minimize the contamination level of the clean water discharged after oil-water separation to a level of 15 ppm or less, through a large-capacity oil treatment via a real-time oil-water separation function, by the structure of the contaminated water flow, the filter structure, the adjustment of filter performance, and the arrangement of each part, when recovering contaminated water generated in small-scale spill accidents.

In the surface floating layer removal apparatus (10) according to the present invention, a contaminated water inlet (20; contaminated water recovery unit) (not clearly visible in FIG. 1A due to the angle of the drawing, but refer to FIG. 1B, etc.) is disposed at the front (left direction in the figure), which is the direction of travel of the movable hull (10).

Behind the contaminated water inlet (20), a storage unit (40) (internal storage container) exists where the introduced contaminated water is stored. The inside of the contaminated water inlet (20) and the internal storage container (40) of the hull (10) are connected. Furthermore, an attachable/detachable external storage container (60) is located in the rear (right direction in the figure) of the internal storage container (40).

FIG. 1B is a perspective view showing the apparatus according to the first embodiment of the present invention, viewed obliquely from the front side.

Unlike FIG. 1A, which is viewed obliquely from the rear side, FIG. 1B is viewed obliquely from the front side and is a side cross-sectional view with some members omitted, allowing the internal structure to be confirmed.

The apparatus (10) of the present invention basically has a core operating principle: [Contaminated water flows into the inlet (20) -> Oil is stored in the storage unit (40) (oil-water separation proceeds due to filter and density difference) -> Clean water (purified water) after oil-water separation is discharged below the filter (HF2)].

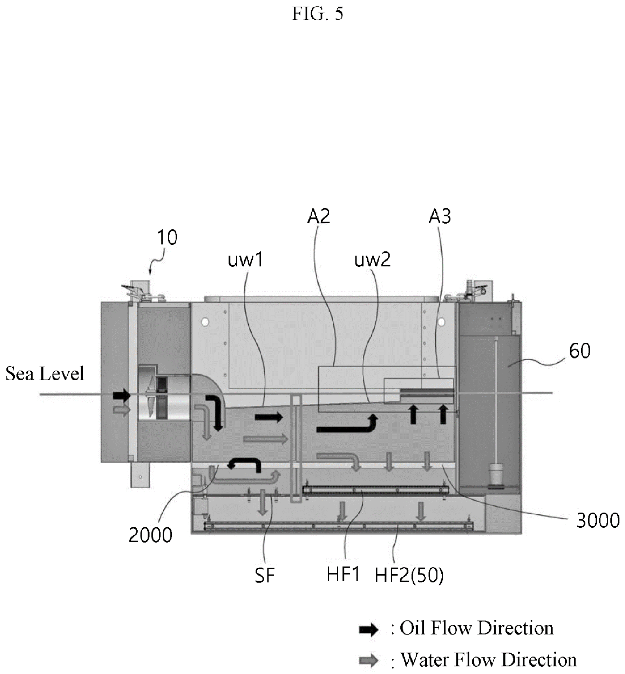

As will be described in detail later, the approximate principle is that the recovered oil passes over the inclined surfaces (uw1, uw2 in FIG. 5) and gathers in the area near the sea surface in the rear (A2) of the internal storage unit (40). By selectively recovering only the accumulated oil generated by the specific gravity difference (A3 in FIG. 5), only the precisely desired contaminated water can be recovered.

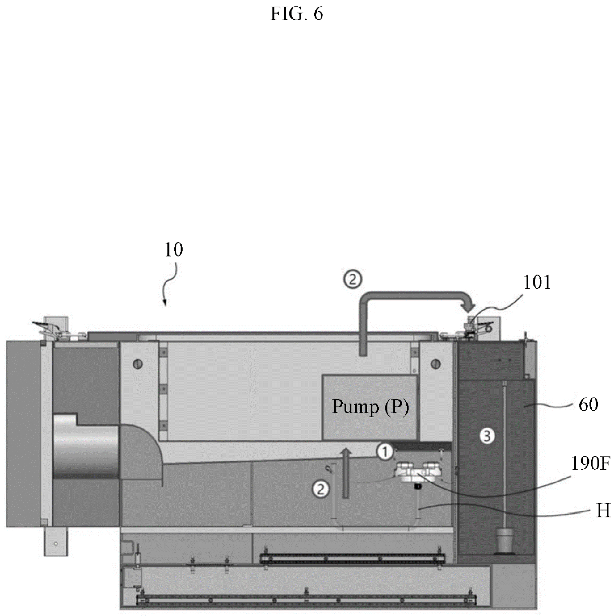

When a large amount of oil is recovered, the oil accumulates inside the storage unit (40) (internal storage container). If this oil is not continuously discharged, the recovery amount gradually decreases, and there is a risk of oil leaking out. The present invention can continuously recover only the oil by operating the pump (P) (in FIG. 6) in real-time, thereby maintaining the recovery amount and allowing smooth usage until the external storage container (60) is full.

The contaminant (e.g., oil) extracted from the internal storage unit (40) (internal storage container) is transferred to the external storage container (60) via the pump (P) (in FIG. 6).

The above is a general description. The components are described one by one as follows.

The contaminated water inlet (20) includes, for example, an inlet port (21) and an impeller (31). In FIG. 1B, two inlet ports (21) and two impellers (31) are shown, but it is not limited thereto.

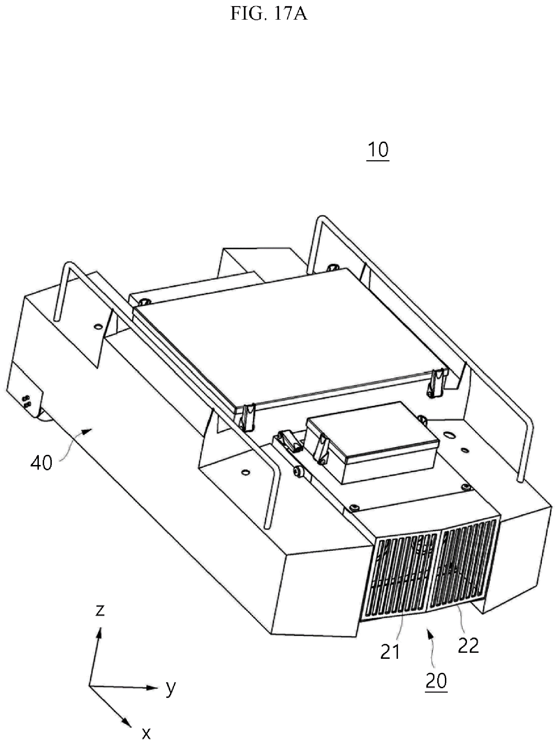

While the hull (10) is floating on the water surface, the water surface remains within the height range of the inlet port (21). As the hull (10) moves forward (moving in the left direction in FIG. 1B), contaminated water can flow in. A filtering means (not shown) (however, a filtering means (22) is shown in FIG. 17A of the later-described fourth embodiment) may be installed in front of the inlet port (21) to prevent the inflow of large solid floating objects in the contaminated water.

Also, although not shown in FIGS. 1A and 1B, a separate propulsive impeller (not shown) (separate from the impeller (31) of the contaminated water inlet (20), for propulsion of the hull (10)) may be installed near the bottom of the hull (10) to move the hull (10) back and forth (this will be explained again in the fourth embodiment described later in FIG. 17A and subsequent figures). For example, there may be two propulsive impellers (not shown), but the number can be adjusted as needed.

The discharge port (50; discharge unit) is the part where the water remaining after the oil is separated from the introduced contaminated water is discharged. In FIG. 1B, the discharge port (50) is at the bottom of the hull (10), but if necessary, it may be placed on the rear surface, at the bottom of the rear surface, or at the rear part of the lower surface. However, considering the external storage container (60) to be described later, it is preferable for the discharge port (50) to be at the bottom of the hull (10).

The discharge port (50) includes a lower filter (HF2).

In FIG. 1B, the contaminated water (e.g., oil water) introduced through the inlet port (21) passes through a connection part (1000), flows into the internal storage container (40) (specifically, the front part 40-1), and after rough filtering through the vertical partition (VW), moves to the internal storage container (40) further to the rear (i.e., the rear part 40-2). The vertical partition (VW) may be a simple mesh with lower performance than the upper filter (HF1) and lower filter (HF2) to be described later. This vertical partition (VW) (storage unit partition) may perform full-scale filtering, or it is sufficient if it merely acts to somewhat slow down or obstruct the flow of the fluid. Obstructing (delaying) the flow alone can increase the time or probability for the oil to float to the top due to the specific gravity difference.

In FIG. 1B, the impeller (31) is shown as a means for introducing/recovering oily water (water and oil) through the inlet port (21), but it is not necessarily limited to the use of the impeller (31); for example, other examples using a pump or the like are possible.

In the internal storage container (40) (specifically, 40-2), the oily water separates, with the oil floating to the top and the water sinking to the bottom due to the specific gravity difference. The water is then discharged through the discharge port (50) after passing through the upper filter (HF1) and the lower filter (HF2).

Meanwhile, in addition to the upper filter (HF1) and the lower filter (HF2), a separate small window (or a small filter (SF)) exists on the front side of the upper filter (HF1). Water is also discharged after passing through the small filter (SF) and the lower filter (HF2). The flow of contaminated water (water and oil) will be described later in FIG. 5.

The storage unit (40) is shown. The outer walls on both sides (left and right of the hull) of the storage unit (40) (refer to FIG. 1A, where the hull is uncut) may include a buoyancy body to provide buoyancy. Buoyancy may be provided on the left and right sides of the storage unit (40), or on the lower side of the storage unit (40). It is preferable to provide a slight amount of buoyancy on both the left and right sides and the lower side of the storage unit (40).

The degree of buoyancy is appropriately adjusted so that the impeller (31) is about half-submerged. Half does not mean exactly 50% and may be about 40-60%. At times, it may be submerged about 30-70%. Thus, the action of the half-submerged impeller (31) causes the contaminated water to appropriately move toward the storage unit (40) inside the hull (10).

Of course, it is preferable for the separate propulsive impeller (not shown, a separate component from impeller (31)) that exerts the propulsion for the movement of the hull (10) in the front, rear, left, and right directions to be entirely submerged in water. Only the inlet impeller (31), which is placed near the contaminated water inlet (20), is submerged approximately halfway below the water surface.

FIGS. 2A to 2C illustrate another type of recovery unit (20') replacing the recovery unit (inlet) (20) shown in FIG. 1B (the surface floating layer removal apparatus applying this recovery unit (20') is also referred to as the second embodiment).

That is, the apparatus is called the second embodiment when the recovery unit (20) shown in FIG. 1B (the first embodiment) is replaced and modified with the recovery unit (20') shown in FIGS. 2A to 2C.

The number is not limited thereto, but for example, in the first embodiment shown in FIG. 1B, there are two inlet ports (21) as the recovery unit (20), and an impeller (31) exists in each of the two inlet ports (21).

In the present invention, a modification (i.e., the second embodiment) is possible where the impeller (31) present in the inlet port (21) shown in FIG. 1B (i.e., the first embodiment) is replaced with the form shown in FIGS. 2A to 2C. This is described in detail below.

In FIG. 2A, it can be seen that there is an impeller (31') in the inlet port (21'). However, the biggest difference from the structure of the first embodiment shown in FIG. 1B is that the recovery unit (20) shown in FIG. 1B has a rotation shaft in the center, whereas the recovery unit (20') shown in FIG. 2A does not have a rotation shaft in the center. That is, in the first embodiment shown in FIG. 1B, the impeller (31) rotates via the rotation shaft at the center of the inlet port (21). In the modification (second embodiment) recovery unit (20') shown in FIG. 2A, a rotation shaft does not exist in the center, and the impeller (31') is attached to and driven by the edge (i.e., rim) of the inlet port (21'), not the center. This method can be called a rim-drive method or a rim-driven method, meaning it is connected to and driven (drive) by the edge (rim) rather than the central shaft.

That is, the recovery unit (20) shown in FIG. 1B can be replaced with the recovery unit (20') shown in FIG. 2A. For reference, although FIG. 1B shows two inlet ports (21) and FIG. 2A shows only one inlet port (21'), this does not necessarily mean reducing the number of inlet ports from two to one. That is, the number of inlet ports may be different or the same, but preferably, the number of inlet ports remains two, and only the structure of the inlet port (21') and the impeller (31') is replaced as shown in FIG. 2A. This is because the effect of this replacement is mainly caused by the difference in structure (i.e., the presence or absence of a rotation shaft).

Specifically, in the case of the impeller (31) with a shaft (rotation axis) as in FIG. 1B (i.e., the first embodiment), a problem arises where the blade of the impeller (31) scoops up water and spits it forward when it rotates and emerges from the water. This, in turn, causes the phenomenon of oil being pushed away. This can be partially prevented by installing a plate (i.e., a splash guard (not shown) (however, the splash guard (32) is shown in FIG. 17C of the later-described fourth embodiment)) that blocks a portion of the upper part of the inlet port (21), but complete blocking is difficult. Furthermore, when the robot (10) (oil recovery apparatus, surface floating layer removal apparatus) travels forward on the water to recover oil, if the impeller (31) with a shaft (i.e., the first embodiment of FIG. 1B) goes above a certain travel speed, the phenomenon occurs where the oil on the water surface is pushed away instead of flowing into the recovery unit (20). This is presumed to be because, during travel, a large amount of water flows in, causing the phenomenon of spitting out more water, or the rotation of the shaft and the blade (i.e., impeller (31)) obstructs the inflow of a larger flow rate.

However, when the impeller (31) shown in FIG. 1B (i.e., the first embodiment) is replaced with a rim-drive structure impeller (31') shown in FIG. 2A (i.e., embodiment 2), the phenomenon of the blade (i.e., the vane of the impeller (31')) scooping up water does not occur, and thus the phenomenon of oil being pushed away does not occur. Moreover, when recovering oil while moving forward, the phenomenon of oil being pushed away does not occur at all (or hardly) regardless of the travel speed. Of course, there is a change (increase) in the recovery amount depending on the relative speed.

Although the rim-drive recovery unit structure (i.e., the impeller (31')) shown in FIG. 2A is a simplified representation, it is equipped with a motor, mechanical elements for power transmission, a motor driver, rim-drive blades (vanes), and finally, various sensors (vibration sensor, thermal sensor, encoder sensor, etc.). Utilizing the data from these sensors, it is possible to diagnose various error situations and estimate the life cycle of internal parts to notify the replacement cycle. Furthermore, it can possess a function to automatically determine and propose the optimal rotation speed for different marine environments and contaminants to the customer.

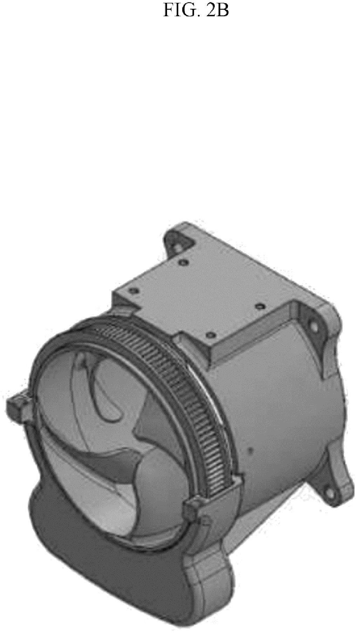

FIG. 2B is a perspective view of the recovery unit (20') shown in the front view in FIG. 2A.

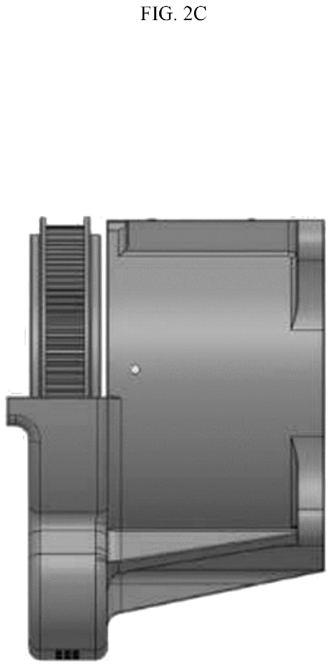

FIG. 2C is a side view of the recovery unit (20') shown in the front view in FIG. 2A.

In FIGS. 2B and 2C, the recovery unit (20') similarly includes the inlet port (21') and the impeller (31').

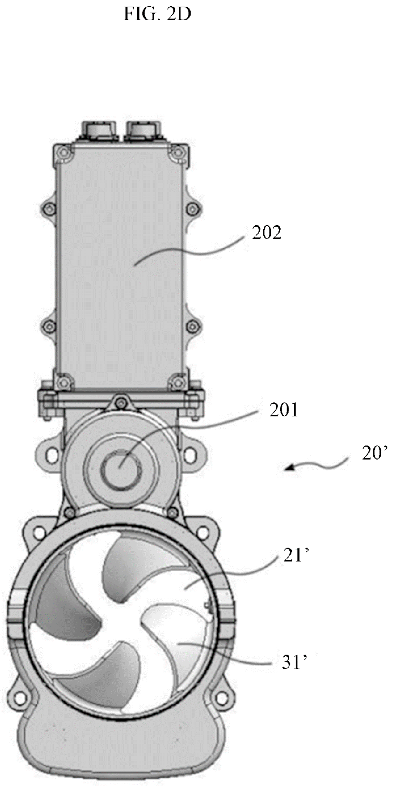

FIGS. 2D to 2F additionally illustrate a portion (upper part (201, 202)) including a motor, a motor driver, a sensor, and the like, added to the rim-drive structure (lower part (21', 31')) respectively shown in FIGS. 2A to 2C.

Although the shape is not limited to FIGS. 2D to 2F, for example, a motor (201) may be present above the impeller (31') formed in the inlet port (21'), and a motor driver/sensor (202) may be present above that. Alternatively, the member 201 may be the motor and motor driver, and the member 202 may be various sensors.

The shape of the recovery unit (20') shown in FIGS. 2D to 2F is an example. If necessary, the upper part may be made smaller or moved to the side, and any shape and size that can replace the recovery unit (20) shown in FIG. 1B is acceptable.

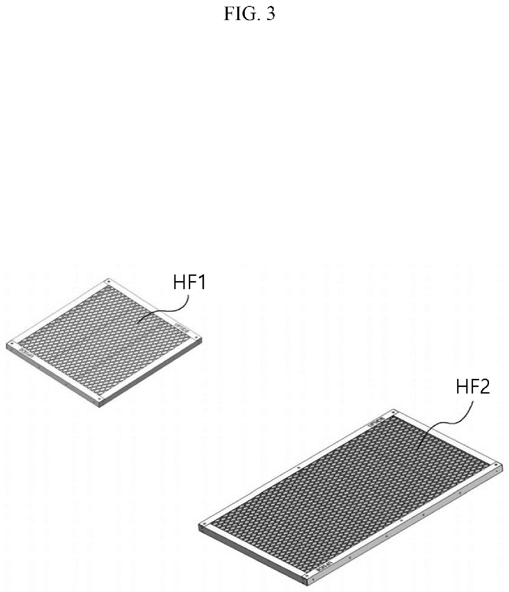

FIG. 3 separately illustrates the upper filter (HF1) and the lower filter (HF2) shown in FIG. 1B.

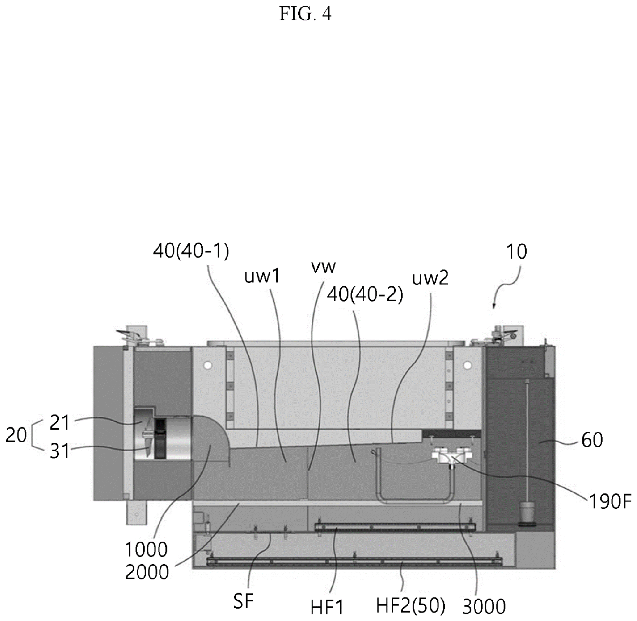

It can be seen that the upper filter (HF1) and the lower filter (HF2) of the shape exemplified in FIG. 3 are arranged at the positions of FIG. 1B or FIG. 4 described below to perform filtering.

However, this shape is an example, and filtering may be performed using other appropriate shapes. Although it is preferable to have two or more filters, it is also possible for either the upper filter or the lower filter to be omitted.

FIG. 4 is a side cross-sectional view taken directly from the side of the front-side perspective cross-sectional view shown in FIG. 1B.

In FIG. 4, as explained in FIG. 1B, the contaminated water inlet (20) (including the inlet port (21) and the impeller (31)), the internal storage container (40), the vertical partition (VW), the upper filter (HF1), the lower filter (HF2), the discharge port (50), and the external storage container (60) are shown.

A front horizontal baffle plate (2000) and a rear horizontal baffle plate (3000) are also shown. These horizontal baffle plates (2000, 3000) can also be viewed as filters in a broad sense, but rather than performing full-scale filtering like the upper filter (HF1) or the lower filter (HF2), it is sufficient for them to merely act to somewhat slow down or obstruct the flow of the fluid. Obstructing (delaying) the flow alone can increase the time or probability for the oil to float to the top due to the specific gravity difference. Of course, they may perform direct filtering of contaminants (oil, etc.) in the contaminated water, beyond just obstructing the flow of contaminated water. The front horizontal baffle plate (2000) and/or the rear horizontal baffle plate (3000) may, for example, be very coarse mesh plates compared to the filters (HF1, HF2), a large window with only edges, or a structure that only provides very rough flow obstruction, such as being cross-shaped when viewed from above even without edges. The shape can be various.

FIG. 5 is a view similar to FIG. 4, but focused on the flow of contaminated water.

In FIG. 5, the dark arrows (or black arrows) indicate the flow of oil, and the light arrows (or grey arrows) indicate the flow of water.

Of course, the flow (the flow of water and the flow of oil) is not clearly distinguished like these arrows, but this is intended to conceptually represent the approximate flow when oily water (oil water) is introduced through the contaminated water inlet (20).

In FIG. 5, the water surface is indicated as the sea surface, but it is not limited to the sea; it can be applied anywhere where there is contaminated water (more broadly, contaminated liquid).

The buoyancy of the hull (10) is adjusted so that the water surface is approximately halfway up the impeller (31). That is, the water will likely not submerge the area above the rotation axis of the impeller (31), and the area below the rotation axis will be submerged in water. At this time, the impeller (31) draws in the contaminated water and sends it toward the connection part (1000).

Also, it is naturally applicable to the recovery and separation of two or more liquids that can be separated by specific gravity difference, even if they are not exactly water and oil. The most typical example given here is contaminated water, which is a mixture of oil and water.

In FIG. 5, the introduced oil passes through the inlet port (21), goes through the connection part (1000), moves to the front internal storage container (40-1), and then generally moves to the upper part of the rear internal storage container (40-2) after passing through the vertical partition (VW). Some of the oil may move to the space below the front internal storage container (40-1) after passing through the front horizontal baffle plate (2000), but it often floats back up to the front internal storage container (40-1).

Regarding the oil moving from the front internal storage container (40-1) to the rear internal storage container (40-2) and then floating up, the upper wall (uw1) of the front internal storage container (40-1) and the upper wall (uw2) of the rear internal storage container (40-2) are both shaped such that the wall (uw1, uw2) becomes higher towards the rear. In this case, due to these inclined walls (uw1, uw2), the oil easily moves to the rear.

If a comparative example where the upper wall (uw1, uw2) is horizontal, unlike the drawing, is assumed, it can be easily seen that the oil would be floating generally uniformly on the top surface of the front internal storage container (40-1) and the rear internal storage container (40-2) (together referred to as the internal storage container (40)). However, according to the present invention (as shown), because the upper walls (uw1, uw2) become higher towards the rear, the oil easily moves to the rear. As a result, the oil tends to accumulate in the oil storage area (A2) generally towards the rear, rather than existing over the entire water surface of the internal storage container (40), and further concentrates in the oil concentration area (A3).

This approximate flow of oil can be confirmed via the dark arrows (black arrows).

The introduced water passes through the inlet port (21), goes through the connection part (1000), moves to the front internal storage container (40-1), and then generally moves to the lower part of the rear internal storage container (40-2) after passing through the vertical partition (VW). Some of the water moves to the space below the front internal storage container (40-1) after passing through the front horizontal baffle plate (2000), and is discharged after passing through the small filter (SF) (it does not have to be a filter, a small window is also acceptable) and the lower filter (HF2).

Another part of the water generally moves to the lower part of the rear internal storage container (40-2). This water moves to the space below the rear internal storage container (40-2) after passing through the rear horizontal baffle plate (3000), and is discharged after passing through the upper filter (HF1) and the lower filter (HF2).

This approximate flow of water can be confirmed via the light arrows (grey arrows).

Although not limited to this, the filtering performance may be relatively high for the upper filter (HF1) and the lower filter (HF2), medium for the small filter (SF), and low for the front horizontal baffle plate (2000) and the rear horizontal baffle plate (3000).

FIG. 6 is a diagram illustrating the transfer of contaminant (e.g., oil) from the internal storage container (40) to the external storage container (60).

In FIG. 6, it can be seen that oil is concentrated in the oil concentration area (A3) (more broadly, oil is present in the oil storage area (A2)) as described in FIG. 5. At this time, a floating part (190F) exists near the oil concentration area (A3) or the oil storage area (A2).

The operation ① (i.e., contaminated water recovery) in FIG. 6 is performed using this floating part (190F).

The buoyancy of the floating part (190F) is appropriately adjusted by selecting the material or the presence of an air layer so that it generally floats between the oil and the water. Alternatively, it may float on top of the oil. However, since having the floating part (190F) float on top of the oil may be disadvantageous for receiving contaminated water, it is preferable to select the material's specific gravity well and appropriately adjust the buoyancy so that it is generally between the oil and the water (near the boundary).

In FIG. 6, the floating part (190F) is shown to be slightly below the water surface, but it is not necessarily limited thereto. Alternatively, the position of the floating part (190F) in FIG. 6 could be assumed to be an example of the boundary between oil and water.

The floating part (190F) is connected to the pump (P) via a hose (H) and is transferred to the external storage container (60) by the operation of this pump (P).

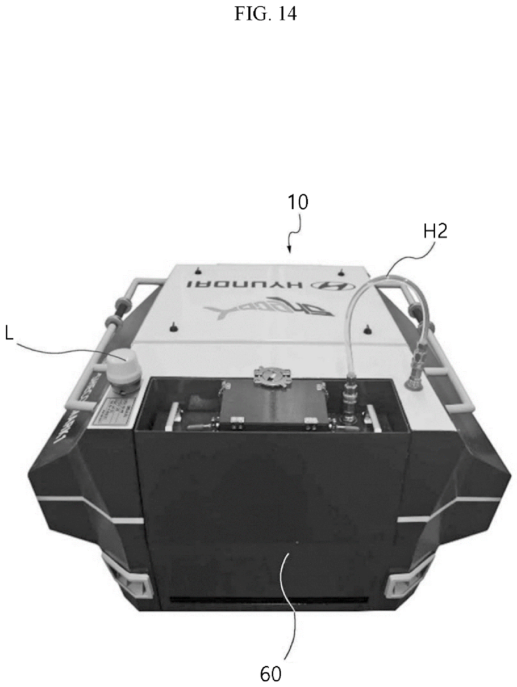

That is, operation ② in FIG. 6 indicates the 'path of movement to the external storage container' (i.e., the 'hose (H) - pump (P) - unshown hose' (the hose is not shown in FIG. 6 but is shown as H2 in FIG. 14)), and operation ③ in FIG. 6 indicates that the contaminated water is stored in the external storage container (60).

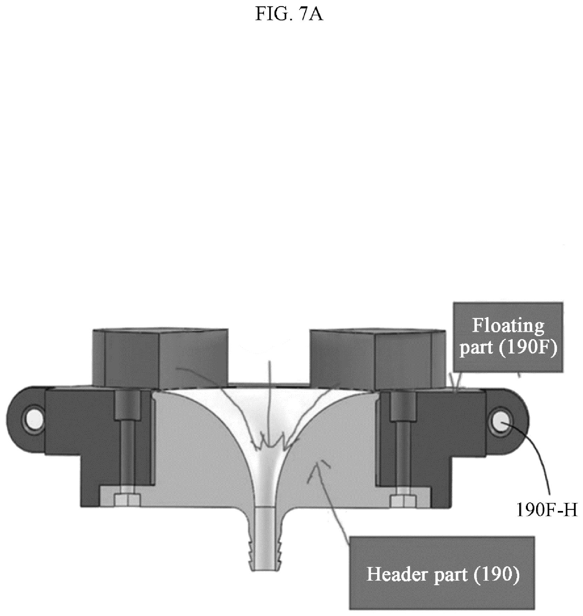

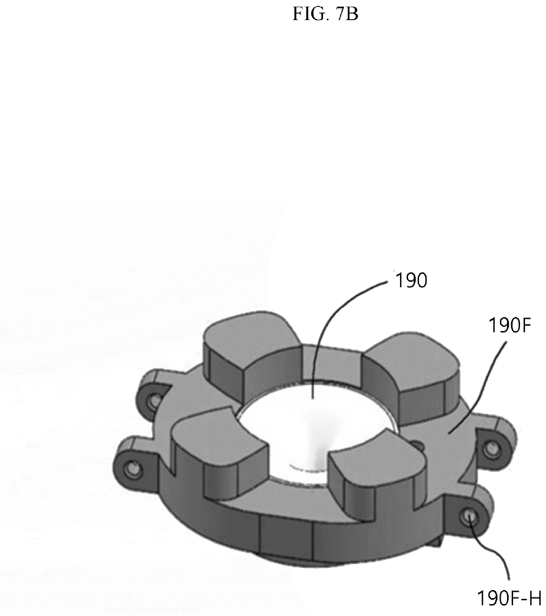

For reference, the structure of the floating part (190F) is explained through the later-described FIGS. 7A and 7B.

FIG. 7A is a cross-sectional view illustrating a form in which a floating part (190F) is attached to a header part (190), and FIG. 7B is a perspective view of the floating part (190F) shown in FIG. 7A.

The header part (190) in FIGS. 7A and 7B is shown as being fixed to a part of the storage unit (40) inside the hull (10) (or the surface floating layer removal apparatus (10)). However, it is not limited thereto, and it is also possible to combine the floating part (190F) with the header part (190) (or give the header part (190) itself a floating function) to make it float, as shown in FIG. 7A.

The header part (190) combined with this floating part (190F) (or the header part (190) itself having a floating function) may be allowed to float in the storage unit (40) (internal storage container) while sucking in contaminated water (i.e., sucking from the storage unit (40) of the hull (10) towards the pump (P)), or the floating part (190F) may be fixed to a specific part inside the storage unit (40). The fixing at this time may use a method of fixing the fixing hole (190F-H) to a specific part inside the storage unit (40).

Of course, the fixing by the fixing hole (190F-H) may be (i) completely fixing the floating part (190F) to a specific location, or (ii) loosely fixing the fixing hole (190F-H) and the internal storage container (40) using a ring and a movable chain or rope, allowing the floating part (190F) to float but only within a certain area (within the range reached by the movable chain or rope). The illustration in the aforementioned FIG. 6 is an example of (ii).

It is clear that a header part (190) with its own floating function can operate in the same way by providing a fixing member of the same or similar shape as the fixing hole (190F-H).

Through this shape and structure, the inflow of liquid (contaminated water) becomes easier.

The floating part (190F) shown in FIG. 7A is shown in a perspective view in FIG. 7B, but it is not necessarily limited thereto. A slightly different shape is acceptable, or it may be a shape in which the floating function is integrated into the header part (190) itself and the shape shown in FIG. 7B is integrally added.

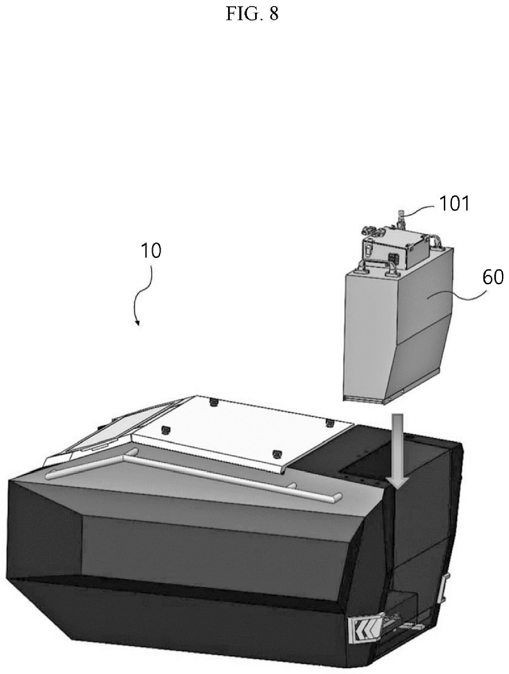

FIG. 8 is a view similar to FIG. 1A, but more clearly illustrating the detachable state of the external storage container (60).

The cross-section shown in FIG. 6 illustrates the state where the external storage container (60) is attached to the hull (10), and FIG. 8 is a diagram schematically showing how the external storage container (60) is attached to the hull.

As described above, the external storage container (60) is detachable, and it can be confirmed that it has handles on both sides for ease of attachment and detachment. It is also easy to replace it with another external storage container (60) as needed.

This detachable external storage container (60) may be called a cartridge (60).

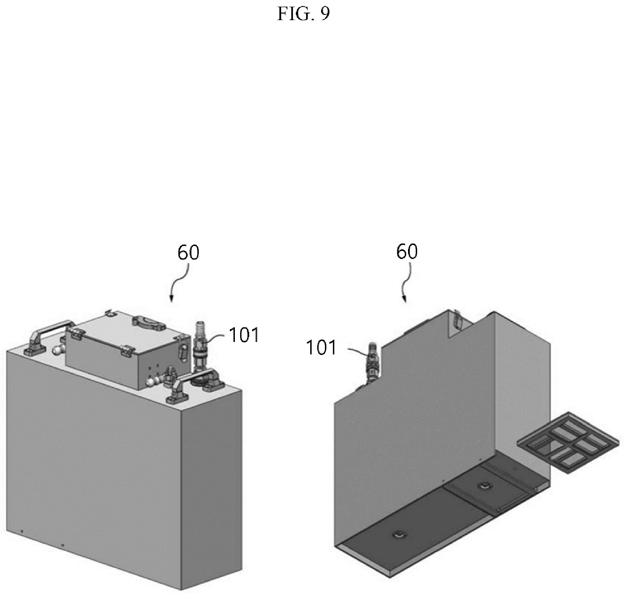

FIG. 9 is a perspective view of the external storage container (60) of FIG. 8.

The left side of FIG. 8 is a top-side perspective view, and the right side of FIG. 8 is a bottom-side perspective view.

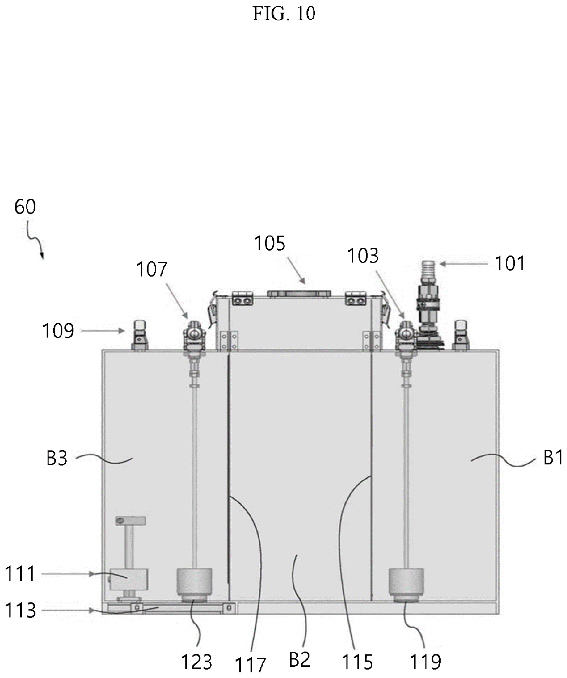

In the bottom-side perspective view on the right of FIG. 8, the filter is shown separated for ease of explanation, but the state with the filter attached is the same as FIG. 10 described below.

This external storage container (60) is a part of the semi-submersible oil skimmer (10) of the present invention. It is an oil storage device (60) that performs oil-water separation inside the storage device (60) simultaneously with the inflow of contaminated material where oil and water are mixed inside the oil skimmer (10), and allows confirmation of the automatic replacement timing.

FIG. 10 is a cross-sectional view of the external storage container (60) shown in FIG. 9 (the case where this external storage container (60) is applied is also referred to as the third embodiment).

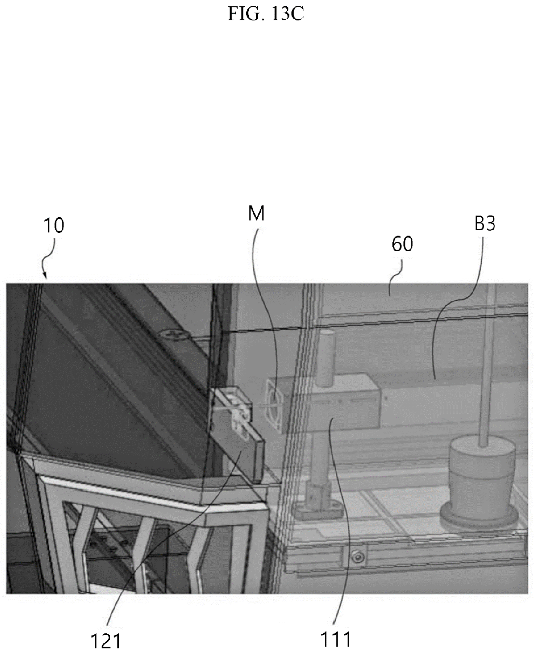

Although the details will be described later, the approximate operating sequence is: [Contaminated water inflow -> Primary oil stacking section (B1) -> Secondary oil stacking section (B2) -> Tertiary oil stacking section (B3) -> Sensor measurement when maximum oil is accommodated (121 in FIG. 13C) -> LED sensor notification (L in FIG. 14) -> Direct discharge of contaminated water after apparatus (60) recovery].

Key points include a filter structure using an internal partition structure (115, 117) and the use of a Hall sensor (121) (in FIG. 13C) to confirm the automatic replacement timing.

In the upper right of FIG. 10, a contaminated water inlet port (101) is formed. As seen in FIG. 6, it can be confirmed that the contaminated water from the internal storage container (40) (storage unit) passes through the hose (H) and is transferred by the pump (P) through another hose (not shown, or H2 in FIG. 14) to the contaminated water inlet port (101) of the external storage container (60).

Contaminated water flows into the external storage container (60) through the contaminated water inlet port (101) in this way.

Although oil and water were roughly separated by specific gravity difference through the flow in FIG. 5, further separation is desirable, and such further separation is performed in the external storage container (60).

The handle (109) is a structure to grasp when attaching or detaching the external storage container (60) to or from the hull (10).

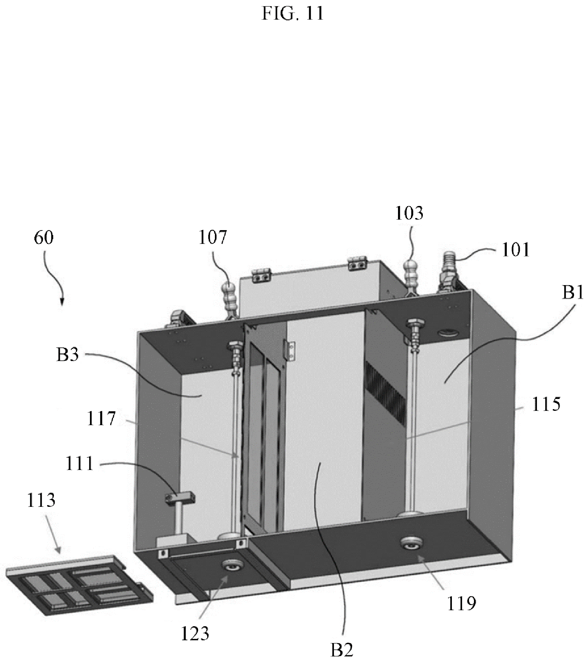

As shown in FIG. 10, there is a primary partition (115) and a secondary partition (117) inside the external storage container. The interior is divided into a primary stacking section (B1), a secondary stacking section (B2), and a tertiary stacking section (B3) by the two partitions (115, 117). An example of the specific structure of the partitions is described later in FIG. 11.

There are two types of levers used: a discharge lever (103) and a filter lever (107).

The discharge lever (103) is opened only when discharging contaminants and is kept closed at all times during normal operation.

The filter lever (107) is opened when the apparatus is deployed and used. It has a filter (113) at the bottom to prevent external contaminants from entering the oil storage device (60) (external storage container). It is closed only when moving the contents inside or when discharging contaminants.

In the example of FIG. 10 or FIG. 11, when the rod below the discharge lever (103) is lifted by its operation, the cover at the very bottom of the rod is lifted, and the discharge hole (119) opens. When the rod below the filter lever (107) is lifted by its operation, the cover at the very bottom of the rod is lifted, and the filter unit hole (123) opens. The operation of these levers (103, 107) is an example, and it is clear that the holes (119, 123) can be opened and closed by the opening and closing of the levers (103, 107) using other methods (other mechanical or electrical methods).

That is, when the apparatus (60) is deployed, the filter lever is open and the discharge lever is closed.

When the apparatus (60) is recovered, the filter lever is closed and the discharge lever is closed.

When contaminated water is discharged, the filter lever is closed and the discharge lever is open.

The deployment of the apparatus (60) refers to attaching the external storage container (60) to the hull (10), and the recovery of the apparatus (60) refers to detaching the external storage container (60) from the hull (10).

FIG. 11 is a perspective view of the cross-section of the external storage container (60) shown in FIG. 10.

The filter (113) in the lower left of FIG. 11 can be inserted into the position in the lower left of FIG. 10.

The primary partition (115), which divides the primary stacking section (B1) and the secondary stacking section (B2), has vertically oriented slits formed at a predetermined height, and the very bottom of the partition is an open structure. The secondary partition (117), which divides the secondary stacking section (B2) and the tertiary stacking section (B3), has a filter applied to almost the entire surface. In this case, the separation of contaminant and water in the secondary partition (117) is greater (i.e., oil-water separation is better) than the separation in the primary partition (115), so it can be expressed that the separation force of the secondary partition (117) is higher than the separation force of the primary partition (115). However, this is an example and is not limited thereto. For example, the primary partition (115) may also have a structure similar to the secondary partition (117).

That is, two vertical partitions (115, 117) with different shapes are formed inside the oil storage device (60) (external storage container). The primary partition (115) has holes only at the sea level position and the very bottom position, serving to keep the oil floating on the sea surface. The secondary partition (117) uses a mesh filter over a wide area to slow down the movement by utilizing the viscosity of the contaminant, preventing sensor malfunction. It also serves to filter internal contaminants.

The primary partition (115) and/or the secondary partition (117), viewed broadly, may perform full-scale filtering, or they may merely act to somewhat slow down or obstruct the flow of the fluid, rather than full-scale filtering. This is because merely obstructing (delaying) the flow can increase the time or probability for the oil to float to the top due to the specific gravity difference. However, to obtain clearer separation, filtering is preferred. In the figure, the primary partition (115) and the secondary partition (117) are shown as cartridge partitions, but the cartridge partition is not necessarily limited to two; one or three or more are also acceptable. However, two is preferable from the viewpoint of processing time, filtering effectiveness or ease, and the balance between appropriate separation purity and processing time.

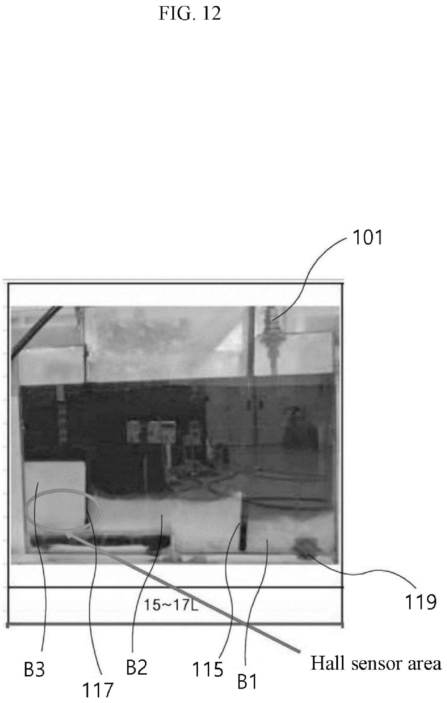

FIG. 12 is a photograph showing the actual situation where oil and water are separated by the primary partition (115) and the secondary partition (117).

In FIG. 12, going from right to left, are the primary stacking section (B1), the secondary stacking section (B2), and the tertiary stacking section (B3). The contaminated water introduced through the inlet port (101) has already had a significant portion of water removed in the internal storage container (40) described above, and thus has a high ratio of contaminant (e.g., oil), but water still exists. Therefore, the oil and water are further separated by the primary partition (115) and the secondary partition (117). As seen in the photograph in FIG. 12, after passing through the primary partition (115), the oil is further separated to the upper part in the secondary stacking section (B2), and after additionally passing through the secondary partition (117), the oil is more clearly separated to the upper part in the tertiary stacking section (B3).

In particular, it can be seen that the boundary between oil and water is clearer in the tertiary stacking section (B3), indicating a higher degree of separation.

The example in FIG. 12 is a case where 15-17 liters of contaminated water were introduced through the inlet port (101), but this amount of contaminated water is just an example and is not limited thereto.

In the example of FIG. 12, the contaminant (e.g., oil) is only halfway up the top in the tertiary stacking section (B3). If the boundary line between the contaminant and water descends further to a predetermined position (e.g., a position where the contaminant fills about 70-90%), the primary stacking section (B1), which has the discharge hole (119), will be filled with contaminant almost 100% (e.g., about 90-100%, depending on the filtering performance of the primary partition (115) and the secondary partition (117)).

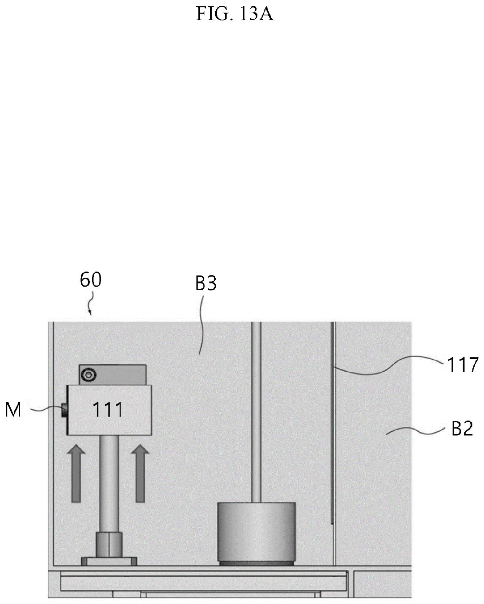

At this time, sensing this in the tertiary stacking section (B3) is done by the buoyancy body (111) and the Hall sensor (121) (refer to FIGS. 13A-13C described below), and the worker is notified of this via an LED or other light (L) (refer to FIG. 14). The worker, seeing this, concludes that the cartridge (60) is full up to the capacity limit of the contaminant. The worker then detaches the cartridge (60), operates the discharge lever (103) in another location after detachment, and causes the discharge hole (119) below the tertiary stacking section (B3) to open to discharge the contaminant (and some water).

To elaborate, the filter unit hole (123) is opened only when the cartridge (60) is deployed and recovered, and it serves to block the internal contaminated water discharge while allowing water to be discharged outward. The discharge hole (119) is opened only when discharging contaminated water after all work is finished and the cartridge (60) is separated on land. Typically, there is no situation where both holes (119, 123) are opened simultaneously.

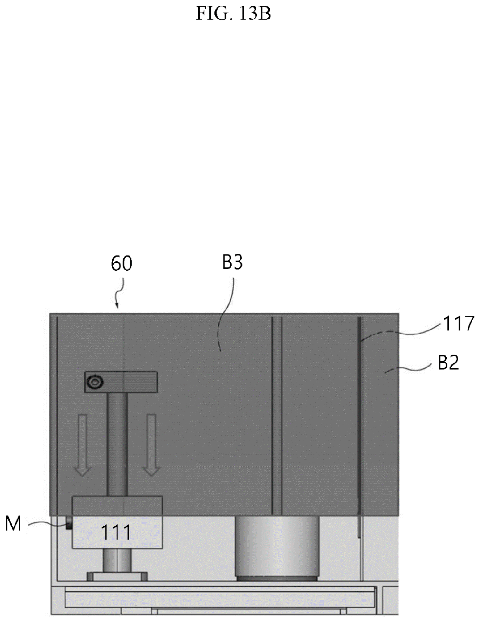

FIG. 13A illustrates a situation where the buoyancy body (111) is floating, FIG. 13B illustrates a situation where the buoyancy body (111) is sinking, and FIG. 13C illustrates a situation where the buoyancy body (111) is near the Hall sensor (121) in a sunken state.

FIG. 13A illustrates a portion of the secondary stacking section (B2) and a portion of the tertiary stacking section (B3) divided by the secondary partition (117).

At the bottom of the tertiary stacking section (B3), there is a buoyancy body (111) that can move up and down along a rod. This buoyancy body (111) has enough buoyancy to float in water but not in oil. If the bottom of the tertiary stacking section (B3) is all water, the buoyancy body (111) will be at the topmost position of the rod, as shown in FIG. 13A.

FIG. 13B also illustrates a portion of the secondary stacking section (B2) and a portion of the tertiary stacking section (B3) divided by the secondary partition (117), but in FIG. 13B, there is more contaminant (e.g., oil).

Since the buoyancy body (111) has enough buoyancy to float in water but not in oil, the buoyancy body (111) is positioned approximately in the middle of the oil (top) and water (bottom), as shown in FIG. 13B. Compared to FIG. 13A, the buoyancy body (111) in FIG. 13B has moved further down the rod.

FIG. 13C is a situation similar to FIG. 13B, but it shows the state where the external storage container (60) is coupled to the hull (10), not just the external storage container (60) itself.

When the buoyancy body (111) has descended to a predetermined position (meaning the maximum amount of contaminant that can be accommodated), as in FIG. 13B or FIG. 13C, a Hall sensor (121) is installed at the height corresponding to the predetermined position on the hull (10). When the magnet attached to the buoyancy body (111) is detected by the Hall sensor (121), the detection fact is indicated. One example of the indication method is to light up an LED or other light (L) (also called an indication means) shown in FIG. 14.

To summarize again:
In FIGS. 13A and 13B, a buoyancy body (111) with a magnet attached is located at the lower left inside the cartridge (60) (external storage container). A Hall sensor (121 in FIG. 13C) is located inside or outside the apparatus (60) opposite to it. The example in FIG. 13C shows the case where the Hall sensor (121) is located on the hull (10) side, not the cartridge (60).

The buoyancy body (111) located inside the cartridge (60) can be manufactured using, for example, a 3D printer, and is designed to float between oil and water based on buoyancy calculations. A magnet (M) is also attached to the position facing the Hall sensor (121 in FIG. 13C).

The buoyancy body (111) normally floats to the top due to buoyancy during operation (FIG. 13A). As the recovery process proceeds and oil gradually accumulates inside, the buoyancy body (111) gradually descends (FIG. 13B).

The sensor (121) operates due to magnetic force when the height of the buoyancy body (111) reaches the set Hall sensor (121 in FIG. 13C) on the opposite side.

The accumulation fills up the location of the Hall sensor (121) the latest. When the buoyancy body (111) descends to the location of the Hall sensor (121), contaminant can be accumulated using the maximum capacity of the storage device (60) (cartridge, external storage container).

The Hall sensor (121) may be installed at a predetermined position of the external storage container (60) or on the hull (10), not the external storage container (60), as long as it is in a position opposite to the buoyancy body (111).

FIG. 14 is a rear view of the hull (10).

As described above, when the magnet attached to the buoyancy body (111) is detected by the Hall sensor (121), that detection fact is indicated. One example of the indication method is to light up the LED (L) shown in FIG. 14.

Accordingly, the worker can know that the external storage container (60) is accommodating contaminant (e.g., oil) up to its capacity limit by looking at the lit external LED (L), without having to check the interior directly. The worker can then remove (detach) the external storage container (60) currently attached to the hull (10) and insert (attach) another empty external storage container (60).

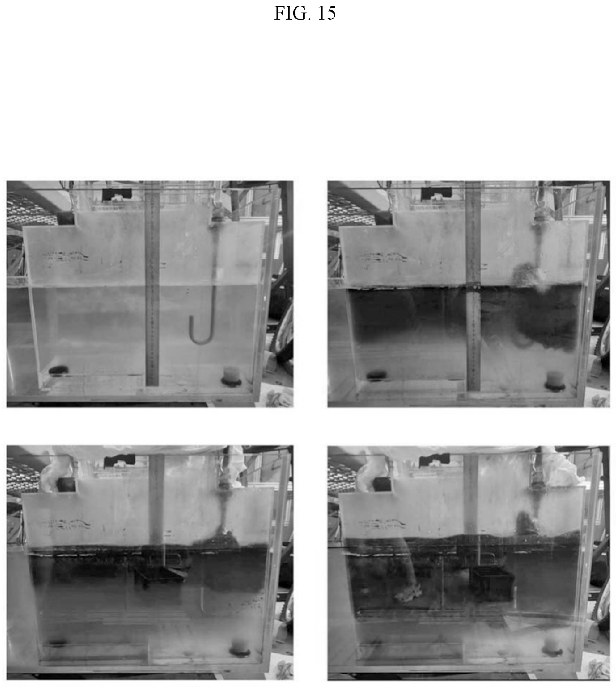

FIG. 15 is a comparative example assuming a case where the external storage container (60) has no partitions (115, 117).

As seen in FIG. 15, as the inflow amount of contaminated water increases and time passes, the degree of separation between oil and water does not increase significantly.

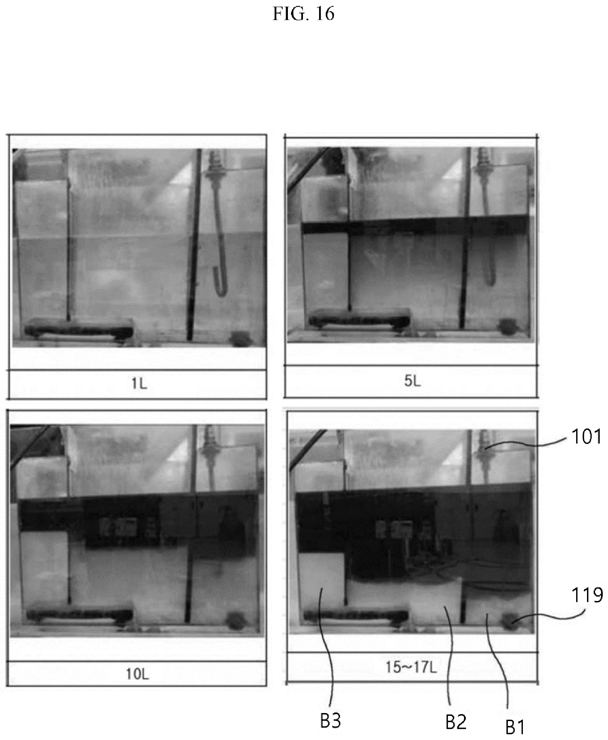

FIG. 16 is an inventive example assuming a case where the external storage container (60) has partitions (115, 117).

As seen in FIG. 16, as the inflow amount of contaminated water increases and time passes, the degree of separation between oil and water increases. In particular, it can be seen that the degree of separation between oil and water increases as it moves from the primary stacking section (B1) -> secondary stacking section (B2) -> tertiary stacking section (B3).
(i) The picture in the upper left of FIG. 16 is an example where 1L of contaminated water has flowed in.
(ii) As inflow proceeds further, the picture in the upper right of FIG. 16 shows an example where 5L of contaminated water has flowed in.
(iii) As inflow proceeds further, the picture in the lower left of FIG. 16 shows an example where 10L of contaminated water has flowed in.
(iv) As inflow proceeds further, the picture in the lower right of FIG. 16 shows an example where 15-17L of contaminated water has flowed in. This figure is identical to FIG. 12.

In the example of FIG. 16 (especially the picture in the lower right), the contaminant (e.g., oil) is only halfway up the top in the tertiary stacking section (B3). If the boundary line between the contaminant and water descends further to a predetermined position (e.g., a position where the contaminant fills about 70-90%), the primary stacking section (B1), which has the discharge hole (119), will be filled with contaminant almost 100% (e.g., about 90-100%, depending on the filtering performance of the primary partition (115) and the secondary partition (117)).

At this time, sensing this in the tertiary stacking section (B3) is done by the buoyancy body (111) and the Hall sensor (121) (refer to the aforementioned FIGS. 13A-13C), and the worker is notified of this via an LED or other light (L). The worker, seeing this, concludes that the cartridge (60) is full up to the capacity limit of the contaminant. The worker then detaches the cartridge (60), operates the discharge lever (103) in another location after detachment, and causes the discharge hole (119) below the tertiary stacking section (B3) to open to discharge the contaminant (and some water).

As described above, the filter unit hole (123) is opened only when the cartridge (60) is deployed and recovered, and it serves to block the internal contaminated water discharge while allowing water to be discharged outward. The discharge hole (119) is opened only when discharging contaminated water after all work is finished and the cartridge (60) is separated on land. Typically, there is no situation where both holes (119, 123) are opened simultaneously.

FIG. 17A is a perspective view of an apparatus according to an embodiment (the fourth embodiment) of the present invention, viewed obliquely from above.

The present invention is not limited to the illustration in FIG. 17A, but is presented as an example to explain the overall matters of the apparatus of the present invention.

For reference, the illustration in FIGS. 17A-17C may be referred to as the fourth embodiment of the present invention.

In the apparatus (10) of FIG. 17A (which can be called by various other names such as hull, oil skimmer, oil recovery robot, robot, surface floating layer recovery apparatus, surface floating layer removal apparatus, marine contaminant recovery apparatus, marine trash recovery apparatus, etc.), a contaminated water inlet (20; contaminated water recovery unit) is arranged at the front of the movable hull (10). A storage unit (40) where the introduced contaminated water is stored exists behind the contaminated water inlet (20). The inside of the contaminated water inlet (20) and the storage unit (40) of the hull (10) are connected.

While the hull (10) is floating on the water surface, the water surface remains within the height range of the inlet port (21), allowing contaminated water to flow in as the hull (10) moves forward. This inlet port (21) includes a filtering means (22) to prevent the inflow of large solid floating objects that may be buoyant in the contaminated water.

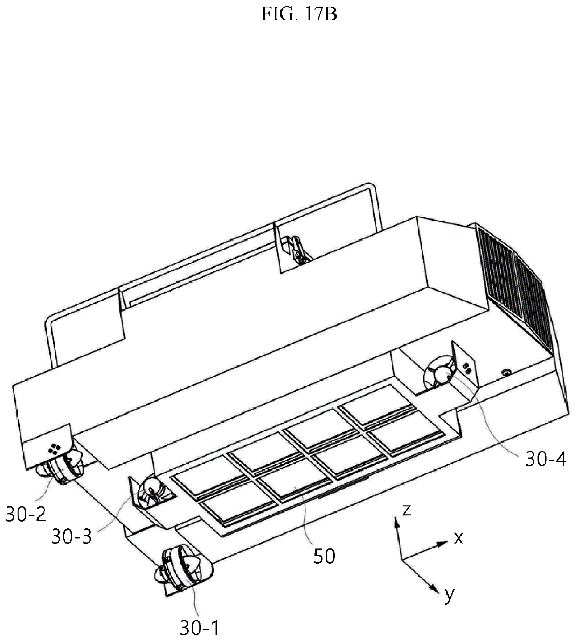

FIG. 17B is a perspective view of the apparatus according to an embodiment of the present invention, viewed obliquely from below.

The impellers (30-1, 30-2) (propulsors) are means (also called propulsion impellers, thrusters, or propulsors) for moving the hull (10) of the apparatus back and forth. Two are shown, but the number can be adjusted as necessary.

The impellers (30-3, 30-4) (propulsors) are means for moving the hull (10) of the apparatus left and right. Although two are shown for this as well, the number can be adjusted as necessary.

The positions and number of the impellers (30-1, 30-2, 30-3, 30-4) are not limited to the illustration, and in fact, the positions and number of the impellers (propulsors) differ in other embodiments described later.

The discharge port (50; discharge unit) is the part where the water remaining after the oil is separated from the introduced contaminated water is discharged. In this exemplary illustration, the discharge port (50) is at the bottom of the hull (10), but if necessary, it may be placed on the rear surface, at the bottom of the rear surface, or at the rear part of the lower surface.

FIG. 17C is a front view of the apparatus according to an embodiment of the present invention.

The filtering means (22) is visible at the front, and the impeller (31) is visible behind it. The entire surface of the impeller (31) is not visible, as the upper part is slightly obscured by a splash guard (32).

Below this, the aforementioned impellers for forward and reverse movement (30-1, 30-2) are shown.

In FIG. 17C, the impeller (31) is illustrated as a means for introducing/recovering oily water (water and oil) in the inlet unit, but it is not necessarily limited to the use of the impeller (31); for example, other examples using a pump or the like are possible.

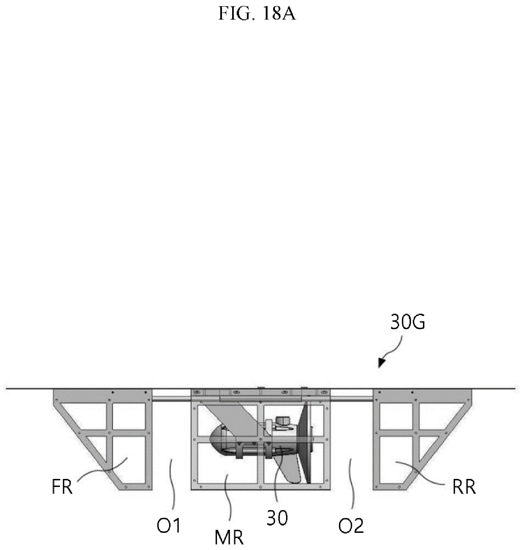

FIGS. 18A to 18C are diagrams illustrating a propulsor guard (impeller guard) (30G) according to the present invention.

The propulsors (30) (also called impellers) are shown with reference numerals 30-1, 30-2, 30-3, 30-4 in FIG. 17B (the fourth embodiment).

Propulsors performing the same function may also be attached to the bottom of the apparatus (10) of the first and second embodiments, although they are not shown. Not only this feature, but also some features of the first, second, third, and fourth embodiments can be applied to other embodiments, as long as there is no contradiction in nature.

In FIGS. 17A to 17C, the propulsors (30; 30-1, 30-2, 30-3, 30-4) (impellers) are all exposed. However, as a modification, the propulsor guard (30G) shown in FIGS. 18A to 18C can be installed to somewhat reduce their exposure.

Specifically, looking at FIG. 18A (side view), it is shown that the propulsor (30) (impeller) is installed below a plate. In FIG. 18A, the direction of travel of the apparatus (10) is to the left. That is, the propulsor (30) exerts thrust toward the right side of FIG. 18A (i.e., the rear of the apparatus (10)), causing the hull (apparatus (10)) to move forward to the left side of FIG. 18A (i.e., the front of the apparatus (10)).

In the side view of FIG. 18A, there is a member divided into several frames, much like a window. Although difficult to tell from the drawing alone, the inside of that roughly rectangular area is lined with mesh, so that fluid passes easily, but trash of a certain size is difficult to approach the vicinity of the propulsor.

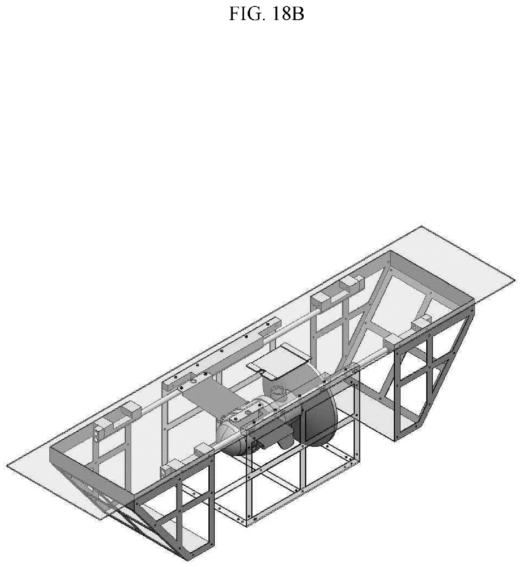

FIG. 18B is a perspective view of the side view shown in FIG. 18A.

It is shown that the propulsor (30) is installed below a transparent plate. This transparent plate is generally not transparent in reality (it is typically a metal or resin plate forming a part of the hull), and it is illustrated transparently for convenience to easily understand the internal structure.

Referring to the reference numerals of FIG. 18A in relation to FIG. 18B, there are roughly three areas: (i) the front area (FR) of the propulsor, (ii) the area where the propulsor is located (middle area (MR)), and (iii) the rear area (RR) of the propulsor. Among these, the area where the propulsor is located in (ii) (middle area (MR)) can move back and forth by means of a rail.

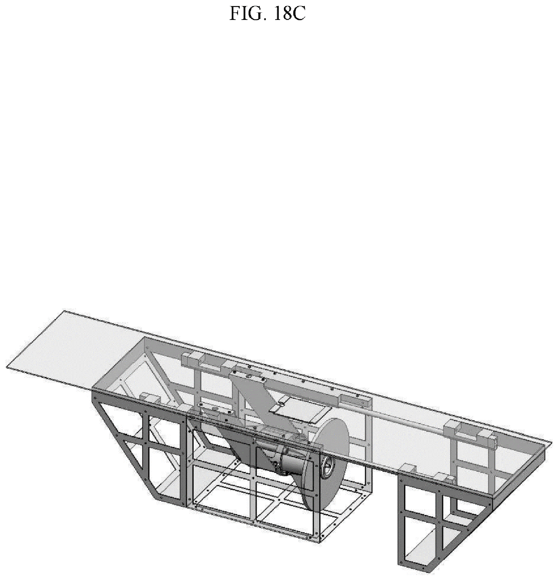

FIG. 18C illustrates the state where the area where the propulsor (30) is located (middle area (MR)) has slid and moved forward.

As mentioned in relation to FIG. 18B, the area where the propulsor (30) is located in (ii) (middle area (MR)) can move back and forth by a rail. In FIG. 18C, the area where the propulsor (30) is located (middle area (MR)) has actually moved forward and is abutted against the front area (FR).

Although not clearly visible in the illustration, since mesh is attached to each window-like section, as mentioned above, fluid can reach the propulsor (30), but trash of a certain volume cannot reach the propulsor (30), thus protecting the propulsor (30).

A different explanation for the propulsor guard (30G) is as follows:
The propulsor guard (30G) is a means to simultaneously prevent the inflow of marine trash and maximize propulsion performance. Most of its housing is made of mesh, but it is capable of opening and closing at the front and rear. This openable/closable part can be opened and closed by the water flow from the propulsor (30). This is to resolve the loss of propulsion performance due to the mesh when thrust is obtained by pushing out the water flow during propulsion, while also utilizing the fact that trash will not flow in due to the outward flow of water from the housing when water is expelled.

In FIGS. 18A to 18C, three areas are presented, and only the middle area (MR) is described as moving. However, it does not need to be limited to this. If necessary, it may be changed so that the front area (FR) and the rear area (RR) move.

Even if only the middle area (MR) moves, the middle area (MR) may be electronically controlled to abut the front area (FR) or the rear area (RR). Alternatively, the middle area (MR) may naturally move forward or backward (by inertia, etc., without separate power) depending on the water flow or the forward/reverse movement of the apparatus (10).

For example, when the apparatus (10) moves forward or when the water flows from the front to the rear of the apparatus (10), the middle area (MR) may naturally move toward the rear area (RR) and remain attached to it. In this case, an open space (O1; first open space) is created between the front area (FR) and the middle area (MR). However, because there is water flow expelled from the propulsor (30), it is not easy for marine contaminants (whether solid or fluid) to enter through the first open space (O1). Also, since mesh is installed in most areas of the propulsor guard (30G) excluding the first open space (O1), it is also protected to some extent in other parts.

Conversely, when the apparatus (10) moves backward or when the water flows from the rear to the front of the apparatus (10), the middle area (MR) may naturally move toward the front area (FR) and remain attached to it (the situation shown in FIG. 18C). In this case, an open space (O2; second open space) is created between the middle area (MR) and the rear area (RR) (refer to FIG. 18C). However, because there is water flow expelled from the propulsor (30), it is not easy for marine contaminants (whether solid or fluid) to enter through the second open space (O2). Also, since mesh is installed in most areas of the propulsor guard (30G) excluding the second open space (O2), it is also protected to some extent in other parts.

Of course, what is described above is an example and is not necessarily limited to such operation. If necessary, the situation may be such that when the apparatus (10) moves forward, it is in a situation like FIG. 18C (i.e., 'the open space is in the rear'), and when the apparatus (10) moves backward, it is in a 'situation where the open space is in the front'.

### <Other Modifications: Fifth Embodiment>

In addition to the aforementioned first to fourth embodiments, modifications with the following features are also possible.

As a fifth embodiment, the present invention enables distance measurement to objects through AI technology mimicking LIDAR during camera-based surface monitoring. This allows the robot (10) operator to be aware of the risk of collision or to use the data for collision avoidance maneuvers.

At this time, the amount of recovered (solid) marine debris can be primarily inferred (first inference) by utilizing a surface monitoring camera to estimate the capacity. The amount of recovered debris can also be secondarily inferred (second inference) through the input value (e.g., current or power), output value (e.g., current or power), and travel speed data entering the propulsors (30-1 to 30-4) of the robot (10) (surface floating contaminant recovery apparatus).

As a solution for inferring the contaminant collection amount of the robot (10):
Analyzing the contaminant collection amount with a camera installed at the upper rear part of the robot (10), and
Considering that it is difficult to infer all the trash capacity submerged in the water, the trash amount inferred value is reinforced with the following additional solution:
   (i) Inferring the robot's travel speed through sensor fusion of data from GPS and IMU (Inertial Measurement Unit) sensors (referred to as 'Speed A'), and simultaneously monitoring the Input and Output data of the propulsor through a system box.
   (ii) Obtaining the robot's travel speed (referred to as 'Speed B') corresponding to the current Input and Output data, based on a pre-calculated propulsion speed table (a data table calculating the robot's propulsion speed based on the propulsor's Input and Output data in an environment without currents and waves).
   (iii) Determining the level of speed propulsion degradation of the robot through the difference between the two speeds (Speed A - Speed B).
   (iv) Reinforcing the numerical value of the marine debris amount inferred by the camera using the data obtained.

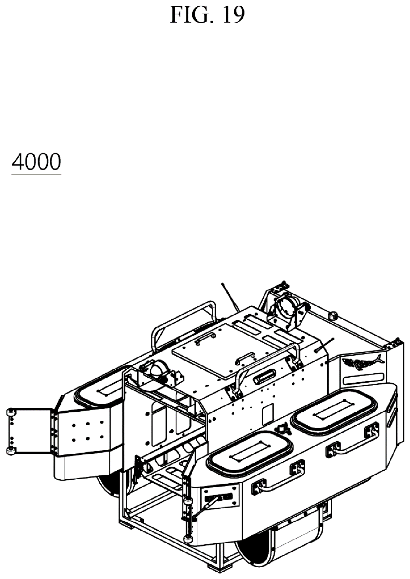

FIG. 19 is a diagram illustrating an example of a hull (4000) of a surface floating layer removal apparatus according to another embodiment of the present invention.

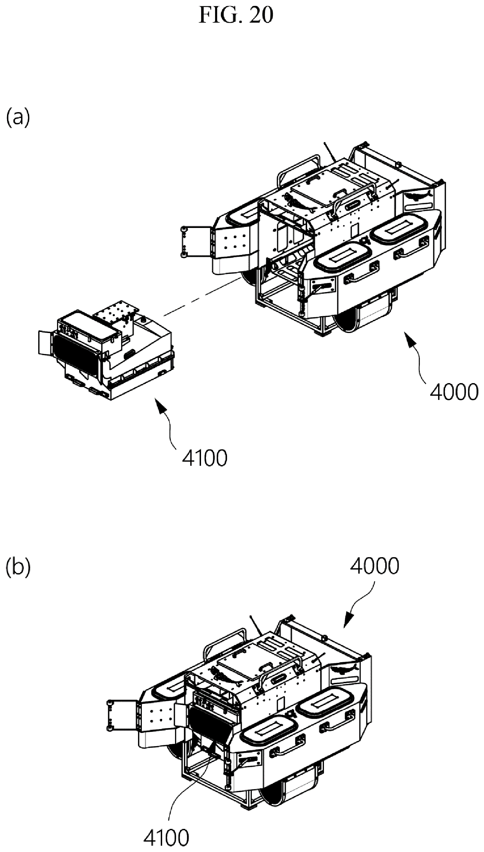

FIG. 20 is a diagram illustrating a hull of a surface floating layer removal apparatus according to an embodiment of the present invention and a contaminated water inlet that can be coupled to the hull.

The hull (4000) of the surface floating layer removal apparatus acts as a platform and can be provided for various purposes such as removing surface floating layers, collecting marine debris depending on the module coupled thereto.

The hull (4000) according to embodiments of the present invention can be provided for the function of the surface floating layer removal apparatus, such as removing a surface floating layer like oil spilled on the water surface, by having a contaminated water inlet (4100) coupled to it.

As shown in (a) of FIG. 20, the contaminated water inlet (4100) can be coupled to the front of the hull (4000), which acts as a platform. And (b) of FIG. 20 shows a surface floating layer removal apparatus in which the contaminated water inlet (4100) is coupled to the hull (4000).

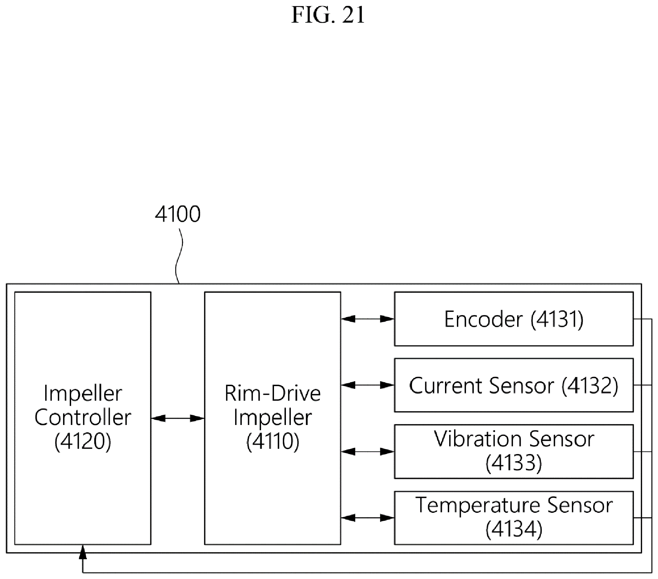

FIG. 21 is a block diagram illustrating the configuration of the contaminated water inlet (4100) according to an embodiment of the present invention.

The surface floating layer removal apparatus according to embodiments of the present invention may include a contaminated water inlet (4100) disposed at the front portion of the hull (e.g., 4000) to receive contaminated water, the contaminated water inlet (4100) including one or more rim-drive impellers (4110).

The rim-drive impeller (4110) may be an impeller where no shaft or the like exists in the middle of the impeller and blades are present along the rim. Because the center is hollow, contaminated water can flow in without colliding with a shaft.

Here, the contaminated water may refer to the water surface environment in a situation where oil, such as petroleum, is spilled into the sea, river, or lake, causing contamination. However, the contaminated water is not limited thereto and may refer to a water surface environment where a floating layer must be removed in a situation where contaminants are floating on the water due to a difference in density.

The contaminated water may include water and pollutants such as oil, and the surface floating layer removal apparatus according to the embodiments can remove pollutants and discharge only water back into the aquatic environment (where pollutants were present in the water) by storing the oil contained in the contaminated water in a cartridge and discharging the water through a discharge port included in the storage unit. In this context, the structure or method of separating what will be discharged back to the exterior of the surface floating layer removal apparatus (e.g., water) and what will be stored in the cartridge of the surface floating layer removal apparatus (e.g., oil)-such as by separating the water and pollutants like oil based on the difference in specific density or by using a filter (e.g., HF1 or HF2 in Figure 3)-can be described as filtering.

The surface floating layer removal apparatus, although not shown in this figure as it exists inside the apparatus, may include a storage unit for storing the contaminated water introduced through the contaminated water inlet, the storage unit including a discharge port for discharging the filtered contaminated water to the outside of the hull, and a pump for moving the contaminated water from the storage unit to the outside of the storage unit.

Furthermore, the contaminated water inlet (4100) may include an impeller controller (4120) for controlling at least one of a target rotational speed or a rotation direction for the one or more rim-drive impellers (4110).

Here, the impeller controller (4120) may perform the function of controlling the rotational speed and rotation direction of the one or more rim-drive impellers (4110), and specifically, may control the rotation speed of the motor of the rim-drive impeller (4110). It may also execute a microcontroller (MCU) or DSP-based signal processing and control algorithm to perform this function, and may include an inverter circuit, a drive circuit, etc., to supply and control power to the motor, as well as an interface unit and ports for communication with other necessary components. The impeller controller (4120) may set the target rotational speed and rotation direction of the rim-drive impeller (4110), calculate a required current corresponding thereto, and operate the one or more rim-drive impellers (4110) based on the calculated required current.

The contaminated water inlet (4100) may further include an encoder (4131) for measuring the actual rotational speed of each of the one or more rim-drive impellers (4110), and a current sensor (4132) for measuring the consumed current of each of the one or more rim-drive impellers (4110).

Here, the encoder (4131) may detect the actual rotational speed and rotation direction of the rim-drive impeller (4100) and transmit the detected actual rotational speed and rotation direction to the impeller controller (4120).

Even if the impeller controller (4120) controls the one or more rim-drive impellers (4110) with the required current corresponding to the set target rotational speed, the actual rotational speed may be different, and the encoder (4131) can measure such an actual rotational speed.

Similarly, even if the impeller controller (4120) transmits the required current corresponding to the set target rotational speed to the one or more rim-drive impellers (4110), the actual consumed current may be different from the required current, and the current sensor (4132) can measure such an actual consumed current.

Furthermore, the impeller controller (4120) may calculate the required current corresponding to the target rotational speed and determine whether an abnormal condition of the rim-drive impeller (4110) exists based on the required current, the consumed current, the target rotational speed, and the actual rotational speed.

Specifically, the impeller controller (4120) may compare the required current and the consumed current, and compare the target rotational speed and the actual rotational speed to determine whether an abnormal condition of the rim-drive impeller (4110) exists. Here, the abnormal condition of the rim-drive impeller (4110) may include, but is not limited to, a state where the gear of the rim-drive impeller (4110) is worn out and spins idly, or a state where the rim-drive impeller (4110) does not rotate due to an object being jammed in its blades.

Meanwhile, the contaminated water inlet (4100) may further include a vibration sensor (4133) for measuring the vibration of each of the one or more rim-drive impellers (4110), and a temperature sensor (4134) for measuring the temperature of each of the one or more rim-drive impellers (4110).

The impeller controller (4120) may determine whether replacement of the rim-drive impeller (4110) is necessary based on at least one of the measured temperature or the measured vibration.

That is, the surface floating layer removal apparatus according to embodiments can indirectly infer the lifespan of each rim-drive impeller (4110) by having the impeller controller (4120) collect and analyze the changes in vibration and temperature that occur as the rim-drive impeller (4110) is driven.

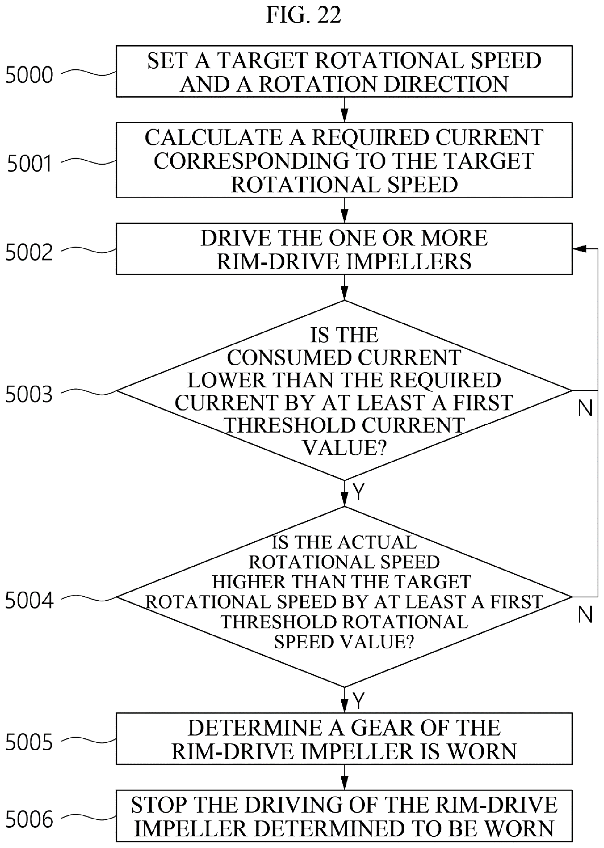

FIG. 22 is a flow chart illustrating an example of determining whether the rim-drive impeller (4110) is worn according to an embodiment of the present invention.

A user can set the target rotational speed and rotation direction of the rim-drive impeller via the impeller controller (5000). The impeller controller can then calculate the required current corresponding to the target rotational speed (5001). As described above, the impeller controller is a component that controls the driving of the one or more rim-drive impellers and can determine and control the current supplied to the rim-drive impeller (5002).

The impeller controller can determine whether the consumed current is lower than the required current by at least a first threshold current value (5003). The required current is the current supplied, necessary to drive the rim-drive impeller at the target rotational speed set by the impeller controller, and the consumed current is the current actually consumed by the rim-drive impeller while driving, as measured by the current sensor. A consumed current that is lower than the required current by a certain level can be evidence that energy is not being transferred to the rim-drive impeller as intended. In this respect, the first threshold current value can be a value greater than the case where the consumed current is substantially similar to the required current or within the expected error range of the current sensor's measurement, and its value can change based on user settings, machine learning, and so on.

If it is determined that the consumed current is lower than the required current by at least the first threshold current value (Y of 5003), the impeller controller can determine whether the actual rotational speed is higher than the target rotational speed by at least a first threshold rotational speed value (5004). If the actual rotational speed is higher than the target rotational speed by at least the first threshold rotational speed value (Y of 5004), it can be determined that the gear of the rim-drive impeller is worn (5005). The fact that the actual rotational speed is higher than the target rotational speed by a certain level despite the consumed current being low compared to the required current may be interpreted as the gear being measured by the encoder rotating, but the impeller blades not rotating due to the gear being worn, rather than the rim-drive impeller actually operating as designed. In this respect, the first threshold rotational speed value can have a value significantly greater than the rotational speed value that may occur within a normal range relative to the consumed current, and its value can change based on user settings, machine learning, and so on.

The impeller controller can then stop the driving of the rim-drive impeller determined to be worn (5006).

As described above, the surface floating layer removal apparatus according to embodiments may include one or more rim-drive impellers, and there may be a plurality of rim-drive impellers. If only some of the plurality of rim-drive impellers are worn, the surface floating layer removal can be performed with only the remaining normal rim-drive impellers. Therefore, the surface floating layer removal apparatus according to embodiments can stop the driving of only the rim-drive impeller determined to be worn (5006) and continue the surface floating layer removal.

In FIG. 22, the determination of whether the consumed current is lower than the required current by at least the first threshold current value (5003) is performed before the determination of whether the actual rotational speed is higher than the target rotational speed by at least the first threshold rotational speed value (5004). However, this is merely an example. The determination on the rotational speed (5004) may be performed before the determination on the current (5003). According to another embodiment, the determination on the current (5003) and the determination on the rotational speed (5004) may proceed simultaneously in parallel.

In this way, the surface floating layer removal apparatus according to the present invention compares the consumed current and the actual rotational speed with the required current and the target rotational speed to determine the degree of wear of the rim-drive impeller, thereby improving the convenience of maintenance for the surface floating layer removal apparatus and continuing its function without energy waste even when wear occurs.

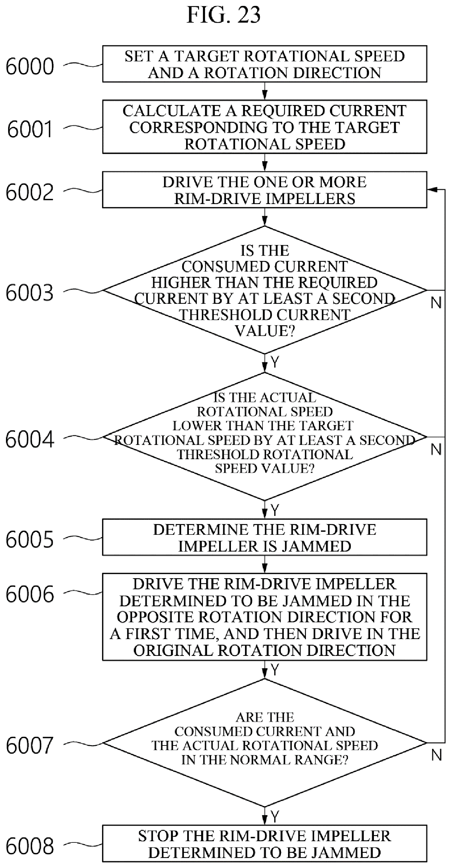

FIG. 23 is a flow chart illustrating an example of determining whether the rim-drive impeller is jammed according to an embodiment of the present invention.

A user can set the target rotational speed and rotation direction of the rim-drive impeller via the impeller controller (6000). The impeller controller can then calculate the required current corresponding to the target rotational speed (6001). As described above, the impeller controller is a component that controls the driving of the one or more rim-drive impellers and can determine and control the current supplied to the rim-drive impeller (6002).

The impeller controller can determine whether the consumed current is higher than the required current by at least a second threshold current value (6003). If the consumed current is higher than the required current by a difference greater than a certain level, it is a case where current is consumed more than necessary, which can be evidence that an excessive load is being applied to the rim-drive impeller. In this respect, the second threshold current value may be different from the first threshold current value, and it may be a standard for determining the level at which the current consumption is considered abnormal. Its value can change based on user settings, machine learning, and so on.

If the consumed current is higher than the required current by at least the second threshold current value (Y of 6003), the impeller controller can determine whether the actual rotational speed of the rim-drive impeller is lower than the target rotational speed by at least a second threshold rotational speed value (6004). If the actual rotational speed of the rim-drive impeller is lower than the target rotational speed by at least the second threshold rotational speed value, it can be determined that an object is jammed in the blades or other parts of the rim-drive impeller (6005). The fact that the actual rotational speed is lower than the target rotational speed by a certain level despite the consumed current being higher than the required current by a certain level can be evidence that the energy delivered to the rim-drive impeller is being consumed in unnecessary places. In this respect, the second threshold rotational speed value can be a standard that goes beyond simple measurement error and determines the point where energy waste is severe enough to hinder the function of the surface floating layer removal apparatus according to embodiments or prevent the execution of the original floating layer removal plan. Its value can change based on user settings, machine learning, and so on.

That is, the impeller controller can determine that the rim-drive impeller is jammed if the consumed current is higher than the required current by at least the second threshold current value, and the actual rotational speed is lower than the target rotational speed by at least the second threshold rotational speed value (6005).

In FIG. 23, the determination of whether the consumed current is higher than the required current by at least the second threshold current value (6003) is performed before the determination of whether the actual rotational speed of the rim-drive impeller is lower than the target rotational speed by at least the second threshold rotational speed value (6004). However, this is merely an example. The determination on the rotational speed (6004) may be performed before the determination on the current (6003). According to another embodiment, the determination on the current (6003) and the determination on the rotational speed (6004) may be performed simultaneously in parallel.

The impeller controller can then drive the rim-drive impeller determined to be jammed in the reverse rotation direction for a first time, and then drive it again in the original rotation direction (6006). Even if the rim-drive impeller is jammed, the object causing the jamming may be dislodged during the process of reversing the blades. To cope with such a case, the rim-drive impeller according to embodiments reverses the jammed rim-drive impeller but, to minimize the backflow of the floating layer that was drawn in due to a delay in the reverse rotation, drives it in reverse only for the first time and then drives it in the original rotation direction (6006).

To check whether the object has been dislodged by the reverse driving, the rim-drive impeller according to embodiments can re-determine whether the consumed current is higher than the required current by at least the second threshold current value and whether the actual rotational speed is lower than the target rotational speed by at least the second threshold rotational speed value (6007).

If, as a result of the re-determination (6007), the consumed current is not higher than the required current by at least the second threshold current value, or the actual rotational speed is not lower than the target rotational speed by at least the second threshold rotational speed value (Y of 6007), it is determined that the object has been removed through the reverse rotation (6006) and the system has returned to a normal state. The corresponding rim-drive impeller can then be driven according to the planned schedule (6002).

On the other hand, if, as a result of the re-determination (6007), the consumed current is higher than the required current by at least the second threshold current value, and the actual rotational speed is lower than the target rotational speed by at least the second threshold rotational speed value (N of 6007), it is determined that the object jamming cannot be resolved by reverse rotation. Instead of continuing the reverse rotation to remove the object, which could cause a backflow of oil or other material, the driving of the jammed rim-drive impeller can be stopped (6008).

In this way, the surface floating layer removal apparatus according to the present invention compares the consumed current and the actual rotational speed with the required current and the target rotational speed to determine the jamming of the rim-drive impeller. By attempting to remove the jammed object through reverse rotation, the apparatus can minimize failures and resolve abnormal conditions on its own, thereby minimizing unnecessary maintenance time.

Although the embodiments of the present invention have been described above with reference to the accompanying drawings, the present invention is not limited to the above-described embodiments and can be manufactured in various different forms. It will be understood by those skilled in the art that the present invention can be implemented in other specific forms without changing the technical spirit or essential features of the present invention. Therefore, the embodiments described above should be considered in all respects as illustrative and not restrictive.

## Claims

1. A surface floating layer removal apparatus, comprising:
a hull;
a contaminated water inlet arranged at a front portion of the hull to receive contaminated water comprising water and pollutants, the contaminated water inlet including one or more rim-drive impellers;
a storage unit for storing the contaminated water introduced through the contaminated water inlet, the storage unit including a discharge port for discharging the filtered water, separated from the contaminated water, to the outside of the hull; and
a pump for moving the pollutants, separated from the contaminated water, from the storage unit to the outside of the storage unit.

2. The surface floating layer removal apparatus of claim 1, wherein the contaminated water inlet includes:
an impeller controller for controlling at least one of a target rotational speed or a rotation direction for the one or more rim-drive impellers.

3. The surface floating layer removal apparatus of claim 2, wherein the contaminated water inlet further includes:
an encoder for measuring an actual rotational speed of each of the one or more rim-drive impellers; and
a current sensor for measuring a current consumption of each of the one or more rim-drive impellers.

4. The surface floating layer removal apparatus of claim 3, wherein the impeller controller:
calculates a required current corresponding to the target rotational speed, and
determines whether an abnormal condition of the rim-drive impeller exists based on the required current, the consumed current, the target rotational speed, and the actual rotational speed.

5. The surface floating layer removal apparatus of claim 4, wherein the impeller controller:
determines that a gear of the rim-drive impeller is worn if the consumed current is lower than the required current by at least a first threshold current value, and the actual rotational speed is higher than the target rotational speed by at least a first threshold rotational speed value.

6. The surface floating layer removal apparatus of claim 5, wherein the impeller controller:
stops the driving of the rim-drive impeller determined to be worn.

7. The surface floating layer removal apparatus of claim 4, wherein the impeller controller:
determines that the rim-drive impeller is jammed if the consumed current is higher than the required current by at least a second threshold current value, and the actual rotational speed is lower than the target rotational speed by at least a second threshold rotational speed value.

8. The surface floating layer removal apparatus of claim 7, wherein the impeller controller:
drives the rim-drive impeller determined to be jammed in the rotation direction opposite to the original rotation direction for a first time, and then drives it again in the original rotation direction.

9. The surface floating layer removal apparatus of claim 1, wherein the contaminated water inlet further includes:
a vibration sensor for measuring a vibration of each of the one or more rim-drive impellers; and
a temperature sensor for measuring a temperature of each of the one or more rim-drive impellers.

10. The surface floating layer removal apparatus of claim 9, wherein the impeller controller:
determines whether replacement of the rim-drive impeller is necessary based on at least one of the measured temperature or the measured vibration.
